# FASCICULE DE BREVET EUROPEEN

(11) **EP 0 996 660 B1**
(45) Date de publication et mention de la délivrance du brevet: **03.04.2002**
(21) Numéro de dépôt: 98937614.0
(22) Date de dépôt: 10.07.1998
(51) Int. Cl.: C08G 77/392, C08L 21/00, C08K 3/36

(54) **PROCEDE DE PREPARATION DE POLYORGANOSILOXANES (POS) A FONCTIONS THIOLS, LES POS SUSCEPTIBLES D'ETRE OBTENUS PAR CE PROCEDE ET LEUR UTILISATION DANS NOTAMMENT LE DOMAINE DES MATERIAUX EN CAOUTCHOUC**
VERFAHREN ZUR HERSTELLUNG VON THIOLGRUPPEN-ENTHALTENDEN POLYORGANOSILOXANEN, MIT DIESEM VERFAHREN HERGESTELLTE ORGANOPOLYSILOXANE UND DEREN ANWENDUNG IN GUMMI
METHOD FOR PREPARING POLYORGANOSILOXANES (POS) WITH THIOL FUNCTIONS, POS OBTAINABLE BY THIS METHOD AND THEIR USE PARTICULARLY IN RUBBER MATERIALS

(30) Priorité: 11.07.1997 FR 9709116; 04.02.1998 FR 9801513
(43) Date de publication de la demande: 03.05.2000
(73) Titulaire: RHODIA CHIMIE, 92408 Courbevoie Cédex (FR)
(72) Inventeur: BARRUEL, Pierre, F-69160 Tassin la Demi-Lune (FR); BOMAL, Yves, F-75018 Paris (FR); GUENNOUNI, Nathalie, F-69540 Irigny (FR); MIGNANI, Gérard, F-69008 Lyon (FR); PRIOU, Christian, F-69100 Villeurbanne (FR)
(74) Mandataire: Trolliet, Maurice
(86) Numéro de dépôt international: FR9801506
(87) Numéro de publication internationale: WO9902580

(56) Documents cités:
- WO-A-96/16125
- WO-A-96/16126
- DD-A- 299 187
- FR-A- 2 094 859
- US-A- 2 960 492
- US-A- 4 082 790

## Description

Un premier objet de l'invention est celui de la fonctionnalisation de silicones, en particulier de polyorganosiloxanes (POS en abréviation) linéaires.

Les POS fonctionnalisés, auxquels on s'intéresse plus spécifiquement dans le cadre de l'invention, sont des polyorganosiloxanes linéaires multifonctionnalisés comprenant des fonctions polaires alkoxyles et des fonctions comportant chacune un groupement thiol SH.

Ces fonctionnalités confèrent aux POS des propriétés spécifiques qui permettent de les utiliser, notamment, et il s'agit là d'autres objets de l'invention, comme agent modulateur d'anti-adhérence dans des compositions silicones ou comme agent de recouvrement de charge blanche, notamment de charge siliceuse en vue de favoriser la mise en oeuvre de la charge dans les compositions de silicones chargées et de permettre de renforcer les produits silicones obtenus. Ces POS polyfonctionnalisés sont utilisables encore comme agent de couplage charge blanche-élastomère dans les compositions de caoutchouc(s) comprenant une charge blanche, notamment une matière siliceuse, à titre de charge renforçante.

Le principe de la multifonctionnalisation de POS est décrit dans le document WO-A-96/16125 au nom de la Demanderesse. Ce document divulgue notamment la préparation de POS comprenant des motifs fonctionnels ≡Si-(O-alkyle) et des motifs fonctionnels ≡Si-(chaîne à groupement soufré, notamment SH). La fonction -(O-alkyle) est introduite sur un polyhydrogénoorganosiloxane approprié par une réaction de déshydrogéno-condensation à partir de l'alcool dont dérive la fonction -(O-alkyle) (dans cette étape une fraction des groupements ≡SiH de départ se trouve substituée par des fonctions alkoxyles), puis la fonction -(chaîne à groupement soufré, notamment SH) est introduite par hydrosilylation d'une oléfine portant le groupement soufré, par les groupements ≡SiH restants.

Poursuivant des travaux dans ce domaine de la technique, la Demanderesse a maintenant trouvé, et c'est ce qui constitue le premier objet de l'invention, qu'il est possible d'apporter des fonctions à groupement SH en faisant réagir l'hydrogène sulfuré sur un POS multifonctionnalisé précurseur comportant un groupement réactif spécifique qui, en présence d'un catalyseur, conduit à un groupement SH ; le groupement dont il est question est une insaturation éthylénique située en extrémité de chaîne ou dans la chaîne reliée à un atome de silicium.

II existe de nombreux documents de l'art antérieur qui décrivent la fonctionnalisation de composés organiques insaturés éthyléniquement par H₂S ; mais, à la connaissance de la Demanderesse, il n'y est jamais question, d'où l'originalité de la présente invention, que lesdites réactions utilisent comme matière première des POS fonctionnalisés appropriés.

La présente invention, prise dans un premier objet, concerne donc un procédé de préparation de POS multifonctionnalisés, comprenant des fonctions polaires alkoxyles et des fonctions comportant chacune un groupement thiol SH, qui sont des copolymères linéaires, statistiques, séquencés ou à bloc, de formule moyenne suivante : 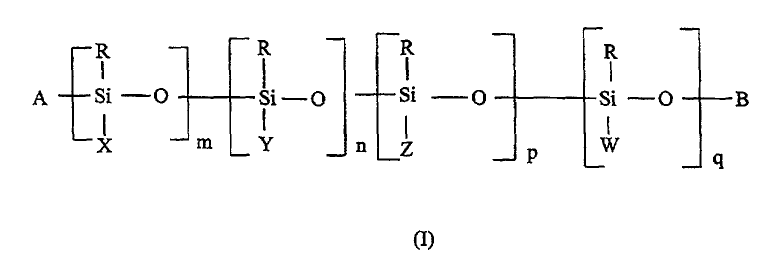 dans laquelle :
- il n'y a pas plus de 3 % de motifs autres que les motifs définis dans la formule (I) - c'est-à-dire les motifs RXSiO_{2/2}, RYSiO_{2/2}, RZSiO_{2/2}, RWSiO_{2/2} et les motifs constitutifs des groupements terminaux A et B - lesdits motifs autres consistant dans des motifs T comprenant le motif RSiO_{3/2} et/ou dans des motifs Q = SiO_{4/2}, les % indiqués exprimant le nombre de motifs T et/ou Q pour 100 atomes de silicium ;
- les symboles R, identiques ou différents entre eux, représentent chacun un radical alkyle, linéaire ou ramifié, ayant de 1 à 6 atomes de carbone ou un radical phényle ;
- les symboles X, identiques ou différents entre eux, représentent chacun un radical alkoxyle, linéaire ou ramifié, ayant de 1 à 15 atomes de carbone ;
- les symboles Y, identiques ou différents entre eux, représentent chacun une chaîne R' incluant une insaturation éthylénique, ladite chaîne étant liée à l'atome de silicium par une liaison Si-C où :
   + la chaîne R' possède de 2 à 30 atomes de carbone et éventuellement un ou plusieurs hétéroatome(s) oxygéné(s),
   + l'insaturation éthylénique de R' est:
      → soit présente en terminaison de chaîne et du type : 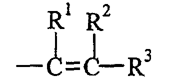 où les symboles R¹, R² et R³, identiques ou différents entre eux, représentent chacun un atome d'hydrogène ou un radical alkyle, linéaire ou ramifié, ayant de 1 à 3 atomes de carbone,
      → soit présente dans une position intermédiaire et du type : 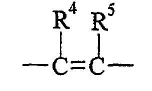
      où les symboles R⁴, R⁵, identiques ou différents entre eux, représentent chacun un atome d'hydrogène ou un radical alkyle, linéaire ou ramifié, ayant de 1 à 3 atomes de carbone, ladite position intermédiaire pouvant être située sur une partie cyclique ou polycyclique de la chaîne R' consistant dans un ou plusieurs cycle(s) ayant de 5 à 12 chaînons ;
- les symboles Z, identiques ou différents entre eux, représentent chacun une chaîne R" liée à un groupement SH, ladite chaîne étant attachée à l'atome de silicium par une liaison Si-C, où :
   + la chaîne R" dérive de la chaîne R' définie supra par addition d'un atome d'hydrogène et d'un groupement SH respectivement sur l'un et l'autre des atomes de carbone doublement liés entre eux de l'insaturation éthylénique,
   + le groupement SH est :
      → soit présent en terminaison de chaîne et du (ou des) type(s) suivant(s) : 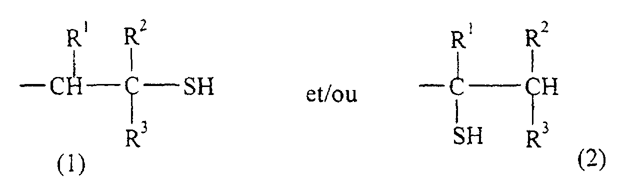 où les symboles R¹, R² et R³ sont tels que définis supra,
      → soit présent dans une position intermédiaire et du (ou des) type(s) suivant(s) : 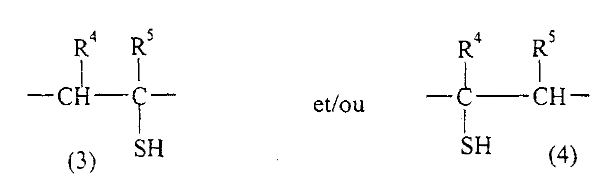 où les symboles R⁴ et R⁵ sont tels que définis supra, ladite position intermédiaire pouvant être située sur une partie cyclique ou polycyclique de la chaîne consistant dans un ou plusieurs cycle(s) ayant de 5 à 12 chaînons ;
- les symboles W, identiques ou différents entre eux, représentent chacun un enchaînement -R"-(S)ᵢ-R"-Si≡ où :
   + i est un nombre entier ≥ 1, de préférence égal à 1 ou 2,
   + le symbole de droite Si≡ représente un atome de silicium appartenant à une autre chaîne polyorganosiloxane ou à la même chaîne polyorganosiloxane ;
- les symboles m, n, p et q représentent chacun des nombres entiers ou fractionnaires, avec les conditions complémentaires selon lesquelles :
   + la somme m + n + p + q se situe dans l'intervalle allant de 2 à 300, de préférence de 10 à 100 et plus préférentiellement encore de 10 à 70,
   + m se situe dans l'intervalle allant de 1 à 150, de préférence de 1 à 50 et plus préférentiellement encore de 1 à 40,
   + la somme n + p + q se situe dans l'intervalle allant de 1 à 150, de préférence de 1 à 50 et plus préférentiellement encore de 1 à 30,
   + n se situe dans l'intervalle allant de 0 à 85, de préférence de 0 à 30 et plus préférentiellement encore de 0 à 20,
   + p se situe dans l'intervalle allant de 1 à 100, de préférence de 1 à 40 et plus préférentiellement encore de 1 à 25,
   + q se situe dans l'intervalle allant de 0 à 25, de préférence de 0 à 5 et plus préférentiellement encore de 0 à 3 ;
- les symboles A et B représentent des groupements terminaux qui comprennent :
   + s'agissant de A : soit des radicaux (i), (2i) ou (3i) pris seuls, soit des mélanges de radicaux (i) avec des radicaux (2i) et/ou (3i) et/ou (4i) : 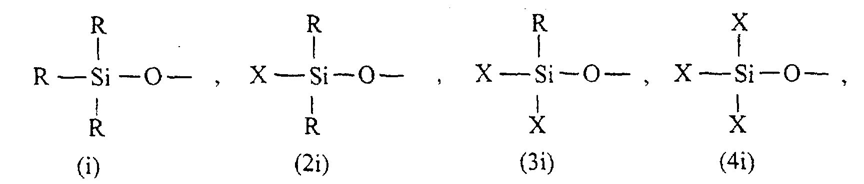
   + s'agissant de B : soit des radicaux (5i), (6i) ou (7i) pris seuls, soit des mélanges de radicaux (5i) avec des radicaux (6i) et/ou (7i) et/ou (8i) 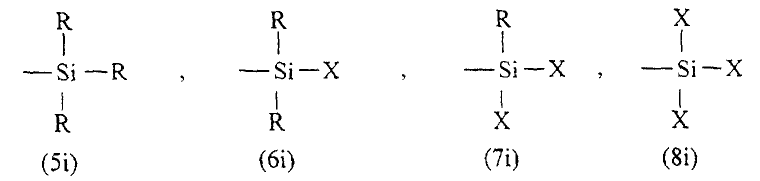
   où les symboles R et X sont tels que définis supra ;
   ledit procédé de préparation des POS de formule (I) étant caractérisé en ce qu'il consiste à faire réagir l'hydrogène sulfuré sur un copolymère linéaire, statistique, séquencé ou à bloc, de formule moyenne : 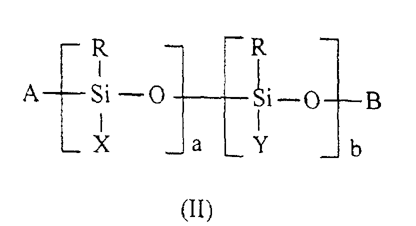 dans laquelle :
   - il n'y a pas plus de 3 % de motifs autres que les motifs définis dans la formule (II) - c'est-à-dire les motifs RXSiO_{2/2}, RYSiO_{2/2} et les motifs constitutifs des groupements terminaux A et B - lesdits motifs autres consistant dans des motifs T comprenant le motif RSiO_{3/2} et/ou dans des motifs Q = SiO_{4/2}, les % indiqués exprimant le nombre de motifs T et/ou Q pour 100 atomes de silicium ;
   - les symboles A, B, R, X et Y sont tels que définis supra à propos de la formule (I) ;
   - les symboles a et b représentent chacun des nombres entiers ou fractionnaires et sont définissables comme il suit:
      + a répond à la même définition que celle de m donnée supra à propos de la formule (I),
      + b = n + p + q ; n, p et q et leur somme répondant aux définitions données supra à propos de la formule (I),
      + la somme a + b répondant à la même définition que celle de la somme m + n + p + q donnée supra à propos de la formule (I) ;
la réaction de H₂S sur le POS (II) étant effectuée en présence d'un catalyseur à base d'un ou plusieurs composé(s) initiateur(s) de radicaux libres, en opérant à une température se situant dans l'intervalle allant de la température ambiante (23°C) à 150°C et en utilisant un excès molaire de H₂S par rapport à l'insaturation éthylénique du POS (II) qui est au moins égale à 5 %.

De manière préférentielle, les symboles R des formules (I) et (II) représentent les radicaux : méthyle, éthyle, n-propyle, isopropyle, n-butyle ; de manière plus préférentielle, au moins 80 % molaire des radicaux R sont des méthyles.

De manière préférentielle, les symboles X des formules (I) et (II) représentent des radicaux alkoxyles, linéaires ou ramifiés, ayant de 1 à 6 atomes de carbone ; les radicaux méthoxyle, éthoxyle et (iso)propoxyle sont retenus plus préférentiellement.

De manière préférentielle, les symboles A et B des formules (I) et (II) représentent respectivement d'une part soit des radicaux (i), (2i) ou (3i) pris seuls, soit des mélanges formés des radicaux (i) + [(2i) et/ou (3i) et/ou (4i)] et d'autre part soit des radicaux (5i), (6i) ou (7i) pris seuls, soit des mélanges formés des radicaux (5i) + [(6i) et/ou (7i) et/ou (8i)], où les symboles R et X correspondent aux modalités préférentielles définies ci-avant.

De manière plus préférentielle, les symboles A et B des formules (I) et (II) représentent des mélanges respectivement formés des radicaux (i) + [(2i) et/ou (3i) et/ou (4i)] et des radicaux (5i) + [(6i) et/ou (7i) et/ou (8i)], où les symboles R et X correspondent aux modalités préférentielles ou plus préférentielles définies ci-avant.

De manière préférentielle, les symboles Y des formules (I) et (II) sont sélectionnés dans la liste qui suit 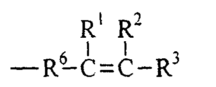 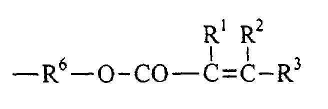 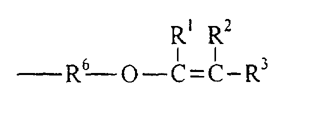 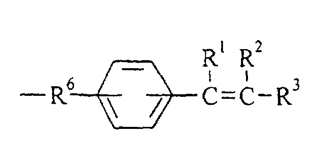 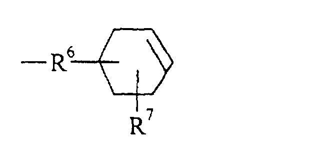 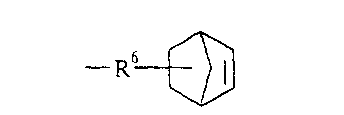 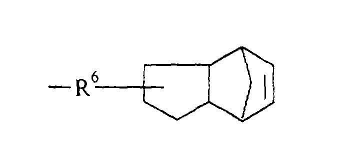 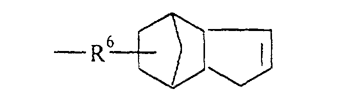 où :
- R¹, R² et R³, identiques ou différents, représentent chacun un atome d'hydrogène ou un radical méthyle ;
- R⁶ représente un radical divalent -(CHR⁸)-ⱼ avec R⁸ étant un atome d'hydrogène ou un groupe méthyle, les différents motifs CHR⁸ pouvant être identiques ou différents entre eux, et avec j étant un nombre entier allant de 1 à 6 ;
- R⁷ représente un atome d'hydrogène ou un radical méthyle.

Les symboles Y retenus plus préférentiellement sont sélectionnés dans la liste qui suit :

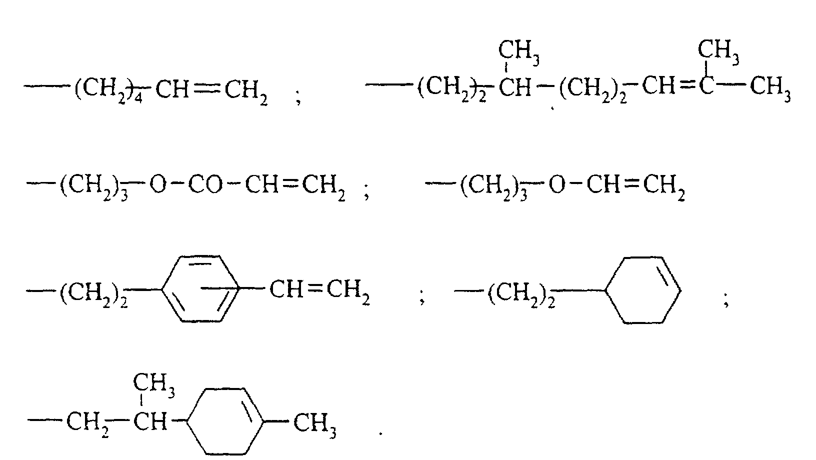

Le lecteur comprendra que, dans les POS de formule (I), les symboles Z qui dérivent des symboles Y retenus par exemple plus préférentiellement, sont sélectionnés dans la liste suivante :

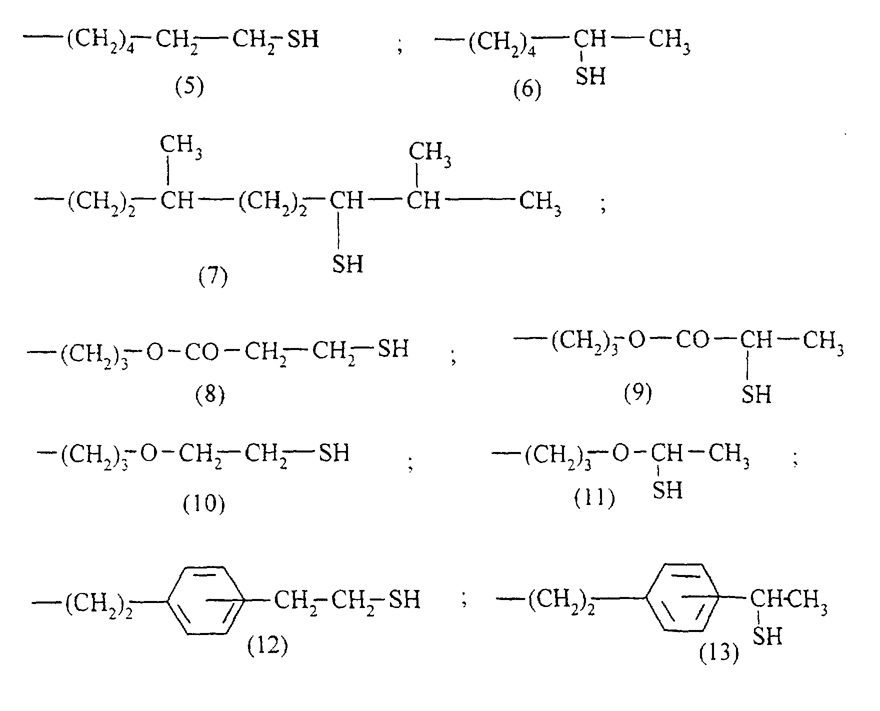

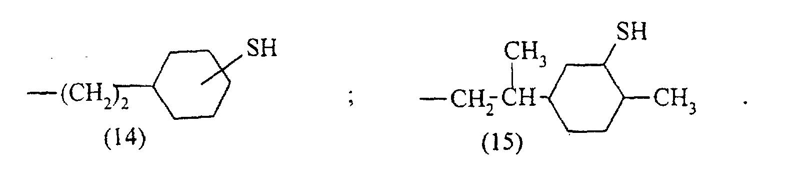

L'ensemble des groupements terminaux A et B de chacun des copolymères POS de formules (I) et (II) présente une composition molaire en radicaux de formules (i) à (8i) qui peut varier dans de larges limites.

Typiquement (et il s'agit là d'une modalité préférentielle), cette composition molaire est la suivante :
- 0 à 100 % molaire de l'ensemble des groupements terminaux comprennent des motifs (R)₃Si, lesquels sont apportés par les radicaux de formules (i) et/ou (5i),
- 0 à 100 % molaire de l'ensemble des groupements terminaux comprennent des motifs (R)₂XSi, lesquels sont apportés par les radicaux de formules (2i) et/ou (6i),
- 0 à 100 % molaire de l'ensemble des groupements terminaux comprennent des motifs R(X)₂Si, lesquels sont apportés par les radicaux de formules (3i) et/ou (7i), et
- 0 à 20 % molaire de l'ensemble des groupements terminaux comprennent des motifs (X)₃Si, lesquels sont apportés par les radicaux de formules (4i) et/ou (8i),
- la somme des radicaux devant dans chaque cas être égale à 100 % en mole.

Quand les symboles A et B représentent des mélanges respectivement formés des radicaux (i) + [(2i) et/ou (3i) et/ou (4i)] et des radicaux (5i) + [(6i) et/ou (7i) et/ou (8i)], cette composition molaire préférentielle peut prendre la forme suivante :
- 20 à une valeur inférieure à 100 % molaire, comme par exemple 20 à 80 % molaire, de l'ensemble des groupements terminaux comprennent des motifs (R)₃Si, lesquels sont apportés par les radicaux de formules (i) et/ou (5i),
- 0 à 80 % molaire de l'ensemble des groupements terminaux comprennent des motifs (R)₂XSi, lesquels sont apportés par les radicaux de formules (2i) et/ou (6i),
- 0 à 80 % molaire de l'ensemble des groupements terminaux comprennent des motifs R(X)₂Si, lesquels sont apportés par les radicaux de formules (3i) et/ou (7i), et
- 0 à 20 % molaire de l'ensemble des groupements terminaux comprennent des motifs (X)₃Si, lesquels sont apportés par les radicaux de formules (4i) et/ou (8i),
- la somme des radicaux devant dans chaque cas être égale à 100 % en mole.

Plus typiquement encore (et il s'agit là d'une modalité plus préférentielle), cette composition molaire est la suivante :
- 20 à 80 % molaire de l'ensemble des groupements terminaux comprennent des motifs (R)₃Si, lesquels sont apportés par les radicaux de formules (i) et/ou (5i),
- 10 à 40 % molaire de l'ensemble des groupements terminaux comprennent des motifs (R)₂XSi, lesquels sont apportés par les radicaux de formules (2i) et/ou (6i),
- 10 à 40 % molaire de l'ensemble des groupements terminaux comprennent des motifs R(X)₂Si, lesquels sont apportés par les radicaux de formules (3i) et/ou (7i), et
- 0 à 10 % molaire de l'ensemble des groupements terminaux comprennent des motifs (X)₃Si, lesquels sont apportés par les radicaux de formules (4i) et/ou (8i),
- la somme des radicaux devant dans chaque cas être égale à 100 % en mole.

Les POS de départ de formule (II) utilisés de préférence sont ceux pour lesquels les symboles A, B, R, X et Y et la composition molaire des groupements terminaux possèdent simultanément les définitions préférentielles données ci-avant, la somme a + b se situe dans l'intervalle allant de 10 à 100, a est un nombre allant de 1 à 50 et b est un nombre allant de 1 à 50.

Les POS de départ de formule (II) utilisés de manière plus préférentielle sont ceux pour lesquels les symboles A, B, R, X et Y et la composition molaire des groupements terminaux possèdent simultanément les définitions plus préférentielles données ci-avant, la somme a + b se situe dans l'intervalle allant de 10 à 70, a est un nombre allant de 1 à 40 et b est un nombre allant de 1 à 30.

Les POS de départ de formule (II) sont des produits qui peuvent être obtenus conformément au procédé qui est décrit dans le document WO-A-96/16125 dont le contenu est incorporé en totalité par référence. Ce procédé consiste essentiellement, par application d'un mode opératoire réalisé avantageusement de manière discontinue :
- d'une part à faire réagir un poly(hydrogénoorgano)siloxane porteur de fonctions hydrogène avec au moins un alcool XH dont dérive la fonction alkoxyle X, utile comme réactif et comme solvant réactionnel, en présence d'un catalyseur approprié, selon un mécanisme de déshydrogénocondensation utilisant une fraction des groupements ≡SiH disponibles au départ ; et
- d'autre part à mettre en oeuvre l'addition du POS ainsi obtenu par déshydrogénocondensation sur au moins un composé comprenant au moins deux insaturations éthyléniques dont dérive la fonction insaturée Y, selon un mécanisme d'hydrosilylation conduit à l'aide des groupements ≡SiH restants.

Les POS de départ de formule (II) sont des produits qui peuvent être aussi obtenus conformément au procédé industriel (semi)continu décrit dans la demande de brevet français déposée par la Demanderesse le 6 août 1996 sous le n° 96/10086 dont le contenu est incorporé en totalité par référence.

Selon ce procédé :
1. on alimente en continu un réacteur A de déshydrogénocondensation avec : un POS précurseur consistant dans un poly(hydrogénoorgano)siloxane présentant au moins dans la chaîne des motifs RHSiO_{2/2} où les symboles R sont tels que définis supra (réactif dénommé dans ce qui suit par l'expression "POS à SiH") ; un alcool de formule XH, dont dérive la fonction alkoxyle X, servant comme réactif et comme solvant réactionnel ; et un catalyseur approprié à base de platine ; en opérant la réaction de déshydrogénocondensation à la pression atmosphérique ou sous une pression supérieure et à la température de reflux du milieu réactionnel, selon un mécanisme utilisant une fraction des groupements ≡SiH disponibles au départ ;
2. on évacue et on récupère en continu le gaz formé en éliminant l'hydrogène qu'il convient et en recyclant l'alcool XH par condensation ; et
3. on transfère immédiatement le POS ainsi obtenu par déshydrogénocondensation (composé dénommé dans ce qui suit par l'expression "POS à SiX et SiH") dans un réacteur B d'hydrosilylation où est réalisé l'addition du composé comprenant au moins deux insaturations éthyléniques, dont dérive la fonction insaturée Y, selon un mécanisme d'hydrosilylation conduit à l'aide des groupements ≡SiH restants, pour récupérer in fine un POS de formule (II) à fonctionnalités SiX et SiY.

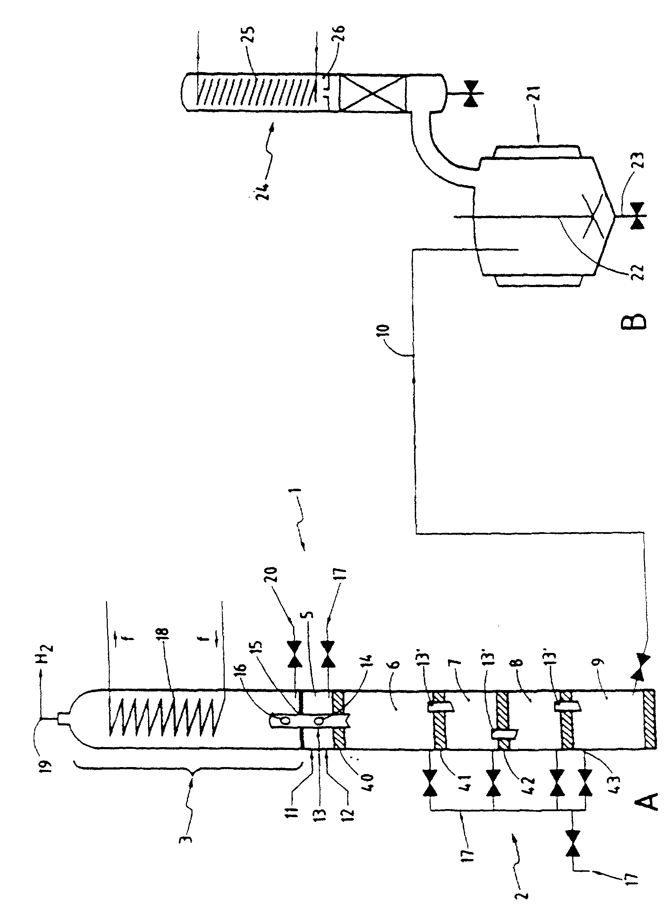

Plus précisément, ce procédé (semi)continu est mis en oeuvre en faisant appel au dispositif décrit dans les lignes qui suivent et dans la figure unique annexée.

Le dispositif représenté comprend un réacteur A continu de déshydrogénocondensation et un réacteur B discontinu ("batch") d'hydrosilylation.

Le réacteur A est, essentiellement, constitué par une enceinte 1, en forme générale de colonne cylindrique creuse. Cette colonne se subdivise, d'une part, en au moins une - en l'occurence une - chambre basse réactionnelle 2 et, d'autre part, en une chambre haute 3 appartenant aux moyens d'évacuation et de récupération rapide du gaz et contenant les moyens de séparation de l'hydrogène.

La chambre basse 2 est pourvue d'au moins un - en l'occurence un - plateau 40 constituant le fond d'un compartiment principal 5, destiné à servir de siège à au moins une partie de la déshydrogénocondensation du POS à SiH. Dans cet exemple de réalisation, la chambre basse 2 de A est du type à multi-étages et comporte au moins un autre étage inférieur - de préférence un à trois et, en l'espèce trois - en plus de celui correspondant au compartiment principal 5.

Chaque étage inférieur comprend un fond, formé par au moins un - en l'occurence un - plateau 41, 42, 43, définissant, avec le fond de l'étage vicinal supérieur, un compartiment 6, 7 et 8 respectivement, pour les plateaux 41, 42, 43.

Ces plateaux 40 à 43 sont, en fait, des cloisons transversales délimitant les compartiments 5 à 8, le plateau 43 définissant, en outre avec le fond de la colonne 1, un culot 9, utile comme réceptable de recueil du milieu réactionnel liquide contenant du POS à SiX et SiH et relié au réacteur B par au moins une canalisation de transfert 10.

Chaque plateau 40, 41, 42, 43 comprend au moins un organe de trop-plein (13, 13') (en l'espèce un) permettant le réglage du niveau de liquide réactionnel. La référence 13 désigne le trop-plein du plateau 40 (compartiment principal 5). Les références 13' désignent les trop-plein des plateaux 41, 42, 43 (compartiments inférieurs 6, 7 et 8).

Le compartiment principal 5 est celui dans lequel débouche la (ou les) conduit(s) d'alimentation 11 et 12 en réactifs. L'organe de trop-plein 13, équipant ce compartiment principal 5, détermine un niveau donné pour le milieu réactionnel liquide dans le compartiment 5. Ce trop plein 13 met en communication le compartiment 5 avec le niveau inférieur de la chambre basse 2, là où se situe la canalisation de transfert 10. Dans le présent exemple, ce niveau inférieur de la chambre basse 2 correspond au culot 9, qui est séparé du compartiment principal 5 par trois compartiments inférieurs 6, 7, 8. En outre, le compartiment principal 5 est en relation, par sa partie supérieure, avec la chambre haute 3.

L'alimentation en milieu réactionnel liquide du compartiment principal 5 peut s'effectuer en continu par l'intermédiaire des conduits d'alimentation 11 et 12. Ces derniers permettent d'acheminer en continu le POS à SiH et le réactif alcool HX en mélange (solution) avec le catalyseur au platine. Ces réactifs se déversent sur le plateau 40, lequel est traversé par l'organe de trop plein 13 formé par un tube cylindrique percé d'un orifice 14, au travers duquel l'excès de milieu réactionnel liquide peut être évacué et acheminé dans le compartiment inférieur 6. Ce tube 13 de trop-plein est axial par rapport à l'enceinte 1 du réacteur A et, de préférence, se prolonge vers le haut, pour mettre en communication le compartiment 5 avec la chambre haute 3. Pour ce faire, le tube 13 s'étend au travers d'une cloison 15 de séparation. La partie supérieure du tube 13, émergeant dans la chambre haute 3 au-dessus de la cloison 15, est pourvue d'une ouverture 16. Ce tube 13 permet l'évacuation rapide, dans la chambre haute 3, du gaz formé dans le compartiment principal 5.

Ce tube 13 peut, éventuellement, être équipé d'au moins une valve anti-retour en lieu et place de l'orifice 16. On peut prévoir un ou plusieurs tubes 13 d'acheminement des gaz du compartiment 5 vers la chambre haute 3.

Les autres organes de trop-plein 13', équipant les plateaux 41, 42 et 43, sont également constitués par des tubes cylindriques dont les axes ne sont pas alignés entre eux. La hauteur de la partie de chaque tube 13', qui s'élve à partir du fond 41, 42, 43, détermine le niveau du trop-plein de liquide réactionnel au-delà duquel ce dernier s'écoulera dans l'étage inférieur. Ainsi, chaque compartiment inférieur 6, 7, 8, de même que le culot 9, est destiné à être alimenté en milieu réactionnel liquide par l'intermédaire du trop plein 13, 13' de l'étage immédiatement supérieur. Le fond de l'étage 8 le plus bas communique, par son trop-plein 13', avec le culot 9 du réacteur A, de manière à permettre le recueil du POS à SiX et SiH. On peut régler, à volonté, le temps de séjour du milieu réactionnel liquide dans chaque compartiment, en jouant sur les niveaux de soutirage des différents plateaux 40, 41, 42, 43.

Des conduites de vidange 17 sont raccordées à la partie basse de chaque compartiment 5, 6, 7, 8. Ces conduites 17 comprennent des vannes représentées symboliquement sur le dessin mais non référencées.

S'agissant de la chambre haute 3, elle est délimitée verticalement par la cloison 15 de séparation avec la chambre basse 2 et par le haut de la colonne 1 du réacteur A. Il convient de signaler qu'elle appartient aux moyens d'évacuation et de récupération rapides du gaz se dégageant de la chambre basse 2 en cours de fonctionnement. Ce gaz passe ensuite, successivement, par l'orifice 14, la lumière et l'ouverture 16 du tube 13.

Conformément à une caractéristique du dispositif utilisé, cette chambre haute 3 comprend des moyens 18 de séparation de l'hydrogène des autres composants du gaz produit lors de la déshydrogénocondensation. En pratique ces autres composants sont des vapeurs de composés volatils, en particulier des vapeurs de l'alcool engagé. Les moyens 18 sont donc constitués par au moins un condenseur - en l'espèce un - symbolisé par un serpentin dans la chambre haute 3 et alimenté en fluide frigorigène selon un flux indiqué par les flèches f représentés sur le dessin.

Ce dernier montre également, de manière schématique, une conduite 19 d'évacuation de l'hydrogène séparé des vapeurs de volatils. Cette conduite 19 est connectée à la partie supérieure de la colonne 1. C'est d'ailleurs sur cette conduite 19, ou en relation avec celle-ci, que peuvent être prévus, par exemple, des moyens de détermination en continu du taux de substitution des SiH du POS à SiH de départ, de façon à permettre la régulation de celui-ci. Ces moyens sont, de préférence, essentiellement constitués par au moins un compteur à hydrogène, avantageusement associés à une unité de calcul. De tels moyens, non référencés et non représentés, peuvent être reliés à un système d'asservissement et de régulation en continu du taux de substitution, également dénommé taux de transformation. Ce système d'asservissement pourrait, par exemple, assurer la régulation en agissant sur les débits d'alimentation et/ou sur les temps de séjour dans les différents étages en modifiant les hauteurs de débordement de chaque trop-plein 13, 13'.

Le condensat, produit grâce au condenseur 18, est récupéré dans le fond de la chambre basse 3, constitué par la cloison 15. Ce condensat peut être soutiré du culot de cette chambre 3 par l'intermédiaire d'une canalisation 20 reliée à un réservoir de stockage et/ou à un circuit de recyclage dudit condensat (constitué essentiellement d'alcool) dans la réaction de déshydrogénocondensation. Dans une telle variante de recyclage du condensat, la canalisation 20 de soutirage serait alors connectée au compartiment principal 5, de manière à permettre l'alimentation de celui-ci en alcool récupéré. Cette variante correspond à une modalité préférée du procédé et du dispositif décrits ici.

Selon une autre variante, le fond (ou la cloison) 15 est supprimé. Dans ces conditions, le condensat d'alcool récupéré est directement collecté dans le compartiment principal 5 sur le plateau 40.

Un tel réacteur A continu multi-étages permet de disposer de grandes surfaces d'échange, qui facilitent la déshydrogénocondensation et l'évacuation du gaz formé contenant l'hydrogène et les vapeurs de volatils. En multipliant les étages, on accroît d'autant cette surface d'échange qui peut, également, être augmentée en jouant sur le diamètre de la colonne et des plateaux de séparation 40 à 43.

Un tel réacteur A permet, également, d'optimiser la surface libre de départ de l'hydrogène, ce qui permet d'éviter un moussage rédhibitoire. Il offre également la possibilité de maîtriser avec précision le taux de substitution des SiH du POS à SiH de départ par les fonctionnalités alkoxyles X, en prévoyant un asservissement tel que présenté ci-dessus.

Les moyens de séparation 18 de l'hydrogène des vapeurs de volatils (alcool essentiellement) par condensation permettent de contrôler le débit gazeux et de récupérer et recycler les condensats, ce qui a pour effet incident d'évacuer, de manière commode, la chaleur de réaction, tout en maîtrisant bien la température de la masse réactionnelle.

Enfin, la sécurité est optimisée grâce au fait que ce réacteur permet le transfert du POS à SiX et SiH obtenu dans le réacteur B, à des fins de neutralisation par hydrosilylation, dès lors que le taux de transformation ou de substitution asymptotique en fonctionnalités alkoxyles X est atteint.

Dans le présent exemple, le réacteur B est un réacteur discontinu d'hydrosilylation, désigné par la référence 21. Il s'agit d'une cuve comportant des moyens d'agitation 22, formés e.g. par un agitateur à hélice. Le fond de ce réacteur 21 est relié à une canalisation 23 permettant la récupération du POS (II) désiré une fois ce dernier formé.

Dans sa partie supérieure, ce réacteur 21 comporte des moyens 24 de récupération des évents gazeux, constitués par une colonne communiquant avec l'intérieur du réacteur 21 et comportant, de préférence, un équipement 25 de traitement des évents pour séparer l'hydrogène des autres gaz. Ces derniers sont constitués par les vapeurs des réactifs volatils, qui peuvent être le composé à hydrogène mobile (alcool) et le composé à hydrosilyler comprenant au moins deux insaturations éthyléniques (dont dérive la fonction insaturée Y).

A l'instar des moyens 18 du réacteur A, cet équipement 25 est constitué par au moins un - en l'espèce un - condenseur des vapeurs de volatils. Ce condenseur est, par exemple, un serpentin (représenté symboliquement sur la figure) parcouru par un flux de fluide frigorigène, également indiqué sur le dessin. Les condensats peuvent être récupérés dans le fond 25 du condenseur pour être stockés et/ou recyclés.

Ainsi donc, le nouveau procédé suivant l'invention consiste à mettre en contact H₂S avec le POS de départ de formule (II).

D'un point de vue pratique, le procédé est conduit dans un réacteur standard et fermé, permettant de mettre en contact du liquide et du gaz avec un catalyseur éventuellement hétérogène, en opérant éventuellement sous pression ; la pression n'est pas un paramètre critique, mais il est avantageux d'opérer sous une pression au moins égale à 1.10⁵ Pa et, de préférence, située dans l'intervalle allant de 5.10⁵ à 20.10⁵ Pa et, plus préférentiellement encore, allant de 7.10⁵ à 14.10⁵ Pa.

Les conditions de l'alimentation en H₂S sont déterminées, comme cela a été indiqué ci-avant, de manière à engager un excès molaire d'H₂S par rapport à l'insaturation éthylénique du POS de formule (II) qui est au moins égale à 5 %.

En ce qui concerne la température de réaction, elle se situe de préférence dans l'intervalle allant de 50°C à 120°C.

Comme catalyseur à mettre en oeuvre, conviennent les composés initiateurs radicalaires comme par exemple les composés azo-organiques, les péroxydes organiques, les percarbonates organiques, utilisés seuls ou en association avec des promoteurs tels que par exemple du nickel et/ou des composés phosphorés trivalents ; pour plus de détails, on peut se reporter en particulier au document FR-A-2.048.451 dont le contenu est incorporé en totalité par référence.

De manière préférentielle, on utilise comme catalyseur au moins un composé initiateur de radicaux libres appartenant à la famille des composés azo-organiques et des péroxydes organiques. De manière plus préférentielle, on utilise au moins un composé initiateur radicalaire appartenant à la famille des composés azo-organiques, comme par exemple le 2,2'-azobis(2,4-diméthyl)pentane-nitrile, le 2,2'-azobis-(isobutyronitrile), le 2-(tert-butylazo)-2,4-diméthylpentanenitrile, le 2-(tert-butylazo)isobutyronitrile, le 2-(tert-butylazo)-2-méthylbutanenitrile, le 1,1-azobis-cyclohexanecarbonitrile. Le catalyseur que l'on retient tout spécialement est le 2,2'-azobis(isobutyronitrile) (en abréviation AIBN).

Pour la plupart des réactions, la quantité de catalyseur, exprimée en pourcentage en poids de catalyseur rapport au POS de départ de formule (II), se situe dans l'intervalle allant de 0,1 à 10 %, et, de préférence, allant de 0,5 à 4 %.

Les réactions entre le H₂S et le POS de départ de formule (II) peuvent être conduites en masse en milieu hétérogène et sans solvant, mais, de manière préférentielle, elles sont conduites en milieu homogène par addition d'un solvant ou d'un mélange de solvant(s) commun(s) au POS (II) et au catalyseur. Les solvants préférés sont de type apolaire aprotique, comme par exemple le chlorobenzène, le toluène, le xylène, l'hexane, le cyclohexane, l'octane, le décane. Les solvants retenus plus préférentiellement sont le toluène et le xylène.

La durée des réactions n'est pas critique ; elle peut par exemple se situer entre 1 heure et 4 heures pour des températures de l'ordre de 70 à 90°C.

Le procédé selon l'invention peut être mis en oeuvre en discontinu ou en continu, en suivant tout mode opératoire connu en soi. Un mode opératoire qui convient bien est le suivant : dans un premier temps, le réacteur est alimenté avec du solvant et le POS (II), puis il est mis ensuite en relation continue avec la source de H₂S pour saturer le milieu réactionnel avec le gaz ; et dans un second temps, on coule alors dans le réacteur la solution de catalyseur. Un autre mode opératoire qui convient bien est le suivant :
dans un premier temps, le réacteur est alimenté avec du solvant, puis il est mis ensuite en relations continue avec la source de H₂S pour saturer le milieu réactionnel avec le gaz ; et dans un second temps, on coule alors dans le réacteur une solution à base du catalyseur et du POS (II).

Les POS multifonctionnalisés de formule (I) définis ci-avant, obtenus par le procédé également décrit ci-avant, dans la structure desquels les symboles n et q représentent simultanément des nombres égaux à zéro sont des produits connus pouvant être préparés selon les indications données dans le document WO-A-96/16125 au nom de la Demanderesse. Les autres POS multifonctionnalisés de formule (I) définis ci-avant, obtenus par le procédé également décrit ci-avant, dans la structure desquels :
- soit le symbole n est un nombre égal à zéro et le symbole q représente alors un nombre différent de zéro,
- soit le symbole n représente un nombre différent de zéro et le symbole q représente alors un nombre qui est égal à zéro ou différent de zéro,
sont des produits qui, à la connaissance de la Demanderesse, sont nouveaux, et il s'agit là d'un second objet de la présente invention. Parmi ces POS, ceux qui sont particulièrement originaux, sont les POS de formule (I) pour lesquels le symbole n représente un nombre différent de zéro et le symbole q représente alors un nombre qui est égal à zéro ou différent de zéro.

Selon d'autres de ses objets, la présente invention concerne l'utilisation d'une quantité efficace d'au moins un POS multifonctionnalisé de formule (I) défini ci-avant (connu et/ou nouveau), obtenu par le procédé également décrit ci-avant, notamment, comme agent modulateur d'antiadhérence dans des compositions silicones ou comme agent de recouvrement de charge blanche, notamment de charge siliceuse en vue de favoriser la mise en oeuvre de la charge dans les compositions de silicones chargées et de permettre de renforcer les produits silicones obtenus. Ces POS multifonctionnalisés de formule (I) peuvent aussi être utilisés avantageusement, et il s'agit là d'un mode d'application préféré, comme agent de couplage charge blanche-élastomère dans les compositions de caoutchoucs comprenant une charge blanche, notamment une matière siliceuse, à titre de charge renforçante.

Les applications envisagées concernent bien entendu tous les POS multifonctionnalisés de formule (I), qu'ils soient connus ou nouveaux, pour lesquels les symboles n, q, A et B (notamment) répondent à la totalité des définitions données supra à propos de la formule (I) qui a été présentée dans le préambule de la description du procédé selon l'invention.

Dans la suite du présent mémoire, on va rentrer plus en détail dans cet autre objet de la présente invention que constitue l'utilisation d'au moins un POS multifonctionnalisé de formule (I) comme agent de couplage charge blanche-élastomère dans les compositions d'élastomère(s) de type caoutchouc, naturel(s) ou synthétique(s), comprenant une charge blanche, notamment une matière siliceuse, à titre de charge renforçante, qui sont destinées à la fabrication d'articles en élastomère(s).

Les types d'articles en élastomère(s), où l'invention est la plus utile, sont ceux sujets notamment aux contraintes suivantes : des variations de températures et/ou des variations de sollicitation de fréquence importante en régime dynamique ; et/ou une contrainte statique importante; et/ou une fatigue en flexion importante en régime dynamique. Des types d'articles sont par exemple : des bandes de convoyeur, des courroies de transmission de puissance, des tuyaux flexibles, des joints de dilatation, des joints d'appareils électroménagers, des supports jouant le rôle d'extracteurs de vibrations de moteurs soit avec des armatures métalliques, soit avec un fluide hydraulique à l'intérieur de l'élastomère, des pièces ressorts se situant entre les éléments métalliques rigides, articulés, de la chenille d'un véhicule en contact avec le sol, des câbles, des gaines de câbles, des semelles de chaussures et des galets pour téléphériques.

Le domaine de l'invention est celui d'une utilisation performante capable de procurer des compositions d'élastomère(s) qui présentent notamment : pour une grande facilité de mise en oeuvre des mélanges crus préparés, en particulier au niveau des opérations d'extrusion et de calandrage, des propriétés rhéologiques marquées par des valeurs de viscosité les plus faibles possibles ; pour atteindre une excellente productivité de l'installation de vulcanisation, des temps de vulcanisation les plus courts possibles ; et pour répondre aux contraintes d'utilisations dont on a parlé ci-avant, d'excellentes propriétés de renforcement conférées par une charge, en particulier des valeurs optimales de module d'élasticité en traction, de résistance à la rupture en traction et de résistance à l'abrasion.

Pour atteindre un tel objectif, de nombreuses solutions ont été proposées qui se sont essentiellement concentrées sur l'utilisation d'élastomère(s) modifiés avec une charge blanche, notamment de la silice, comme charge renforçante. On sait, d'une manière générale, que pour obtenir les propriétés de renforcement optimales conférées par une charge, il convient que cette dernière soit présente dans la matrice élastomère sous une forme finale qui soit à la fois la plus finement divisée possible et répartie de la façon la plus homogène possible. Or, de telles conditions ne peuvent être réalisées que dans la mesure où la charge présente une très bonne aptitude à s'incorporer dans la matrice lors du mélange avec le (ou les) élastomère(s) et à se désagréger ou se désagglomérer, et à se disperser de façon homogène dans la matrice élastomère. L'usage de charge blanche renforçante seule, notamment de silice renforçante seule, s'est révélé inapproprié en raison du faible niveau de certaines propriétés de telles compositions et par voie de conséquence de certaines propriétés des articles mettant en oeuvre ces compositions.

De plus, pour des raisons d'affinités réciproques, les particules de charge blanche, notamment de silice, ont une fâcheuse tendance, dans la matrice élastomère, à s'agglomérer entre elles. Ces interactions charge/charge ont pour conséquence néfaste de limiter les propriétés de renforcement à un niveau sensiblement inférieur à celui qu'il serait théoriquement possible d'atteindre si toutes les liaisons charge blanche-élastomère susceptibles d'être créées pendant l'opération de mélange, étaient effectivement obtenues.

De surcroît, l'usage de la charge blanche soulève des difficultés de mise en oeuvre dues aux interactions charge/charge qui tendent à l'état cru à augmenter la viscosité des compositions élastomères, en tout cas à rendre la mise en oeuvre plus difficile. Enfin, les interactions entre la charge blanche et le système de réticulation lorsqu'il est à base de soufre pénalisent la vitesse et le rendement de la réticulation.

Il est connu de l'homme de l'art qu'il est nécessaire d'utiliser un agent de couplage qui réagit avec les particules de charge blanche pour créer de bonnes interactions entre la surface de la charge et le (ou les) élastomère(s) et un véritable réseau entre les chaînes élastomères tout en facilitant la dispersion de la charge blanche au sein de la matrice élastomère.

Par exemple, pour augmenter l'affinité de la silice avec la matrice élastomère, on a proposé antérieurement d'utiliser : un silane hydrolysable monosulfuré comme par exemple le γ-mercaptopropyltriméthoxysilane ou le γ-mercaptopropyltriéthoxysilane (cf. US-A-3.350.345 et FR-A-2.094.859) et/ou un silane hydrolysable polysulfuré comme par exemple le polysulfure (di-, tri-, tétra-, penta- ou hexasulfure) de bis-(triméthoxysilyl-3 ou triéthoxysilyl-3 propyle) (cf. FR-A-2.206.330). Mais ces silanes de couplage ne permettent pas d'apporter le meilleur compromis possible, pour des vulcanisats chargés à la silice, en termes de sécurité de "grillage" (il convient d'éviter toute vulcanisation prématurée), de facilité de mise en oeuvre, de pouvoir renforçant et du rapport activité/coût de l'agent de couplage.

Pour tenter d'améliorer ce compromis, on a proposé plus récemment d'utiliser, à titre d'agents de couplage, des associations à base d'une part d'un polyorganosiloxane fonctionnalisé par des groupes polaires (en particulier des groupes hydroxyles et/ou des groupes alkoxyles) et éventuellement par des groupes organiques comme par exemple de longues chaînes alkyles, le reste (cyclohexène-3 yl)-2 éthyle ou le reste (méthyl-4-cyclohexène-3 yl)-2 propyle, et d'autre part d'au moins un silane hydrolysable choisi dans le groupe des silanes mono- et polysulfurés par exemple du type de ceux mentionnés ci-dessus (cf. EP-A-0.731.133, WO-A-96/29364, EP-A-0.761.748). Mais cette voie ne permet pas d'obtenir un résultat parfaitement satisfaisant du fait que le polyorganosiloxane fonctionnalisé et le silane se retrouvent en compétition pour réagir sur la surface de la silice, ce qui peut entraîner une mauvaise reproductibilité des propriétés de couplage optimales.

Au vu de l'état antérieur de la technique, il apparaît donc qu'il existe un besoin non satisfait en des utilisations performantes d'agents de couplage à base de composés silicones, dans des compositions d'élastomère(s) comprenant une matière siliceuse comme charge renforçante ou plus généralement comprenant une charge blanche renforçante.

Cet objectif est atteint par l'utilisation d'une quantité efficace d'au moins un POS multifonctionnalisé de formule (I) défini ci-avant, obtenu par le procédé également décrit ci-avant, comme agent de couplage charge blanche-élastomère dans les compositions d'élastomère(s) naturel(s) ou synthétique(s) comprenant une charge blanche à titre de charge renforçante, qui sont destinées à la fabrication d'articles en élastomère(s).

Les POS multifonctionnalisés choisis de manière préférentietle sont les POS de formule (I), sélectionnés parmi ceux obtenus en faisant réagir H₂S sur les POS de formule (II) utilisés "de préférence" décrits supra, qui possèdent des symboles Z, identiques ou différents, représentant chacun une chaîne R" liée à un groupement SH de nature secondaire.

Par "groupement SH de nature secondaire", on entend définir des groupements SH qui sont choisi parmi les groupements de types (1) où l'un au moins des radicaux R² et R³ est différent d'un atome d'hydrogène, (2), (3) et (4), ces types (1) à (4) répondant aux définitions données ci-avant à propos de la formule (I) et étant pris ici dans leur signification préférentielle.

Les POS multifonctionnalisés choisis de manière plus préférentielle sont les POS de formule (I), sélectionnés parmi ceux obtenus en faisant réagir H₂S sur les POS de formule (II) utilisés "de manière plus préférentielle" décrits supra, qui possèdent des symboles Z, identiques ou différents, correspondant cette fois aux enchaînements (6), (7), (9), (11), (13), (14) et (15) répondant aux définitions données supra.

Des POS multifonctionnalisés qui conviennent tous spécialement bien dans cette application agent de couplage, sont les POS de formule (I) dans laquelle :
- R = méthyle ,
- X = méthoxyle ou éthoxyle ;
- Y = 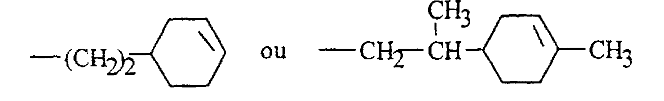
- Z = 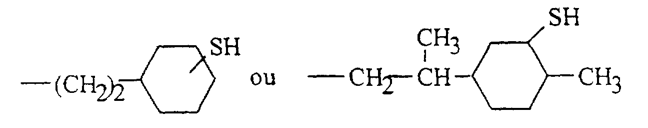
- W = 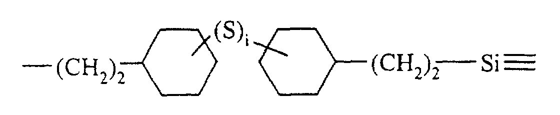 ou 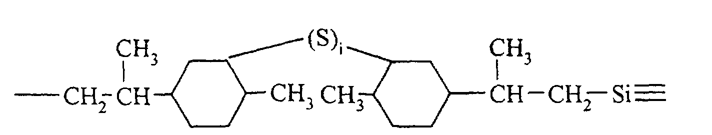 où i est un nombre entier égal à 1 ou 2 ;
- m + n + p + q va de 10 à 70 ;
- m va de 1 à 40 ;
- n + p + q va de 1 à 30 ;
- n va de 0 à 20 ;
- p va de 1 à 25 ;
- q va de 0 à 3 ;
- 20 à 80 % molaire de l'ensemble des groupements terminaux A et B comprennent les motifs (CH₃)₃Si apportés par les radicaux de formules (i) et/ou (5i) où R = méthyle ; 10 à 40 % molaire des groupements terminaux comprennent les motifs (CH₃)₂(OCH₃)Si ou (CH₃)₂(OC₂H₅)Si apportés par les radicaux de formules (2i) et/ou (6i) où R = méthyle et X = méthoxyle ou éthoxyle ; 10 à 40 % molaire des groupements terminaux comprennent les motifs CH₃(OCH₃)₂Si ou CH₃(OC₂H₅)₂Si apportés par les radicaux de formules (3i) et/ou (7i) ; et 0 à 10 % molaire des groupements terminaux comprennent les motifs (OCH₃)₃Si ou (OC₂H₅)₃Si apportés par les radicaux de formules (4i) et/ou (8i) ; la somme des radicaux devant dans chaque cas être égale à 100 % en mole.

Dans le cadre de cette application agent de couplage, la présente invention concerne encore les compositions d'élastomère(s) comprenant une charge blanche renforçante obtenues grâce à l'emploi d'une quantité efficace d'au moins un POS multifonctionnalisé de formule (I).

Plus précisément, ces compositions comprennent (les parties sont données en poids) :
- pour 100 parties d'élastomère(s),
- 10 à 100 parties de charge blanche renforçante, et de préférence 20 à 80,
- 0,5 à 15 parties, et de préférence 2 à 10 parties, de POS pour 100 parties de charge blanche renforçante.

Dans le présent mémoire, on entend définir par l'expression "charge blanche renforçante", une charge blanche capable de renforcer à elle seule, sans autre moyen que celui d'un agent de couplage, une composition d'élastomère(s) de type caoutchouc, naturels(s) ou synthétique(s).

L'état physique sous lequel se présente la charge blanche renforçante est indifférent, c'est-à-dire que ladite charge peut se présenter sous forme de poudre, de microperles, de granulés ou de billes.

De manière préférentielle, la charge blanche renforçante consiste dans la silice, l'alumine ou un mélange de ces deux espèces.

De manière plus préférentielle, la charge blanche renforçante consiste dans la silice, prise seule ou en mélange avec de l'alumine.

A titre de silice susceptible d'être mise en oeuvre dans l'invention conviennent toutes les silices précipitées ou pyrogénées connues de l'homme de l'art présentant une surface spécifique BET ≤ à 450 m²/g. On préfère les silices de précipitation, celles-ci pouvant être classiques ou hautement dispersibles.

Par silice hautement dispersible, on entend toute silice ayant une aptitude à la désagglomération et à la dispersion dans une matrice polymérique très importante observable par microscopie électronique ou optique, sur coupes fines. Comme exemples non limitatifs de silices hautement dispersibles on peut citer celles ayant une surface spécifique CTAB égale ou inférieure à 450 m²/g et particulièrement celles décrites dans le brevet US-A-5 403 570 et les demandes de brevets WO-A-95/09127 et WO-A-95/09128 dont le contenu est incorporé ici.

A titre plus préférentiel, conviennent bien les silices de précipitation ayant :
- une surface spécifique CTAB comprise entre 100 et 240 m²/g, de préférence entre 100 et 180 m²/g,
- une surface spécifique BET comprise entre 100 et 250 m²/g, de préférence entre 100 et 190 m²/g,
- une prise d'huile DOP inférieure à 300ml/100 g, de préférence comprise entre 200 et 295 ml/100 g,
- un rapport spécifique BET/surface spécifique CTAB allant de 1,0 à 1,6.

Bien entendu par silice, on entend également des coupages de différentes silices. La surface spécifique CTAB est déterminée selon la méthode NFT 45007 de novembre 1987. La surface spécifique BET est déterminée selon la méthode de BRUNAUER, EMMET, TELLER décrite dans "The Journal of the American Chemical Society, vol. 80, page 309 (1938)" correspondant à la norme NFT 45007 de novembre 1987. La prise d'huile DOP est déterminée selon la norme NFT 30-022 (mars 1953) en mettant en oeuvre le dioctylphtalate.

A titre d'alumine renforçante, on utilise avantageusement une alumine hautement dispersible ayant :
- une surface spécifique BET comprise entre 30 et 400 m²/g, de préférence entre 80 et 250 m²/g,
- une taille moyenne de particules au plus égale à 500 nm, de préférence au plus égale à 200 nm, et
- un taux élevé de fonctions réactives de surface AI-OH correspondant à celui des alumines de type γ, δ ou θ,
telle que décrite dans le document EP-A-0 810 258 à la page 2, lignes 53-59.

Comme exemples non limitatifs de pareilles alumines renforçantes, on citera notamment les alumines A125, CR125, D65CR de la société BAÏKOWSKI.

A noter que les définitions générales, préférentielles et plus préférentielles concernant les charges blanches renforçantes, qui ont été données ci-avant à propos de la description de l'application agent de couplage charge blanche-élastomère, s'appliquent également à la mise en oeuvre de l'application agent de recouvrement dont on a aussi parlé ci-avant.

Par élastomères susceptibles d'être mis en oeuvre pour les compositions conformes au second objet de l'invention, on entend :
(1) les homopolymères obtenus par polymérisation d'un monomère diène conjugué ayant de 4 à 22 atomes de carbone, comme par exemple : le butadiène-1,3, le méthyl-2 butadiène-1,3, le diméthyl-2,3 butadiène-1,3, le diéthyl-2,3 butadiène-1,3, le méthyl-2 éthyl-3 butadiène-1,3, le chloro-2 butadiène-1,3, le méthyl-2 isopropyl-3 butadiène-1,3, le phényl-1 butadiène-1,3, le pentadiène-1,3, l'hexadiène-2,4 ;
(2) les copolymères obtenus par copolymérisation d'un ou plusieurs des diènes conjugués précités entre eux ou avec un ou plusieurs monomères insaturés éthyléniquement choisis parmi:
   - les monomères vinyles aromatiques ayant de 8 à 20 atomes de carbone, comme par exemple: le styrène, l'ortho-, méta- ou paraméthylstyrène, les chlorostyrènes, le vinyle mésitylène, le divinyle benzène, le vinyle naphtalène ;
   - les monomères nitriles vinyliques ayant de 3 à 12 atomes de carbone, comme par exemple l'acrylonitrile, le méthacrylonitrile ;
   - les monomères esters acryliques dérivés de l'acide acrylique ou de l'acide méthacrylique avec des alcanols ayant de 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'éthyl-2 hexyle, le méthacrylate de méthyle, le méthacrylate d'éthyle, le méthacrylate de n-butyle, le méthacrylate d'isobutyle ;
(3) les copolymères obtenus par copolymérisation d'éthylène, avec une α-oléfine ayant de 3 à 6 atomes de carbone, comme par exemple les élastomères obtenus à partir d'éthylène et de propylène (élastomères EPR) ;
(4) les copolymères ternaires obtenus par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène (élastomère EPDM) ;
(5) le caoutchouc naturel ;
(6) les copolymères obtenus par copolymérisation d'isobutène et d'isoprène (caoutchouc butyle), ainsi que les versions halogénées, en particulier chlorées ou bromée, de ces copolymères ;
(7) un mélange de plusieurs des élastomères précités (1) à (6) entre eux ;
(8) les polyéthylènes chlorosulfonés ;
(9) les hydrocarbures fluorés ;
(10) les élastomères du type épichlorohydrine-oxyde d'éthylène ou polyépichlorohydrine.

A titre préférentiel, on fait appel à un ou plusieurs élastomère(s) choisi(s) parmi : le polybutadiène, le polychloroprène, le polyisoprène, le poly(styrène-butadiène), le poly(acrylonitrile-butadiène) sous forme hydrogénée ou non, le poly(styrène-butadiène-isoprène), un terpolymère(éthylène-propylène-diène monomère non conjugué), le caoutchouc naturel, le caoutchouc butyle.

Les compositions conformes à l'invention contiennent en outre tout ou partie des autres constituants et additifs auxiliaires habituellement utilisés dans le domaine des compositions d'élastomère(s) et de caoutchouc(s).

Ainsi, on peut mettre en oeuvre tout ou partie des autres constituants et additifs suivants :
- s'agissant du système de vulcanisation, on citera par exemple :
   - des agents de vulcanisation, comme par exemple des péroxydes organiques et/ou des agents de durcissement choisis parmi le soufre ou des composés donneurs de soufre, comme par exemple des dérivés de thiurame ;
   - des accélérateurs de durcissement du soufre, comme par exemple des dérivés de guanidine, des dérivés de thiazoles ou des dérivés de sulfénamides ;
   - des activateurs de vulcanisation comme, par exemple l'oxyde de zinc, l'acide stérarique et le stéarate de zinc ;
- s'agissant d'autre(s) additif(s), on citera par exemple :
   - une charge renforçante conventionnelle comme le noir de carbone (dans ce cas, la charge blanche renforçante mise en oeuvre constitue plus de 50 % du poids de l'ensemble charge blanche renforçante + noir de carbone) ;
   - une charge blanche conventionnelle peu ou non renforçante comme par exemple des argiles, la bentonite, le talc, la craie, le kaolin, le dioxyde de titane ou un mélange de ces espèces ;
   - des agents antioxydants ;
   - des agents antiozonants, comme par exemple la N-phényl-N'-(diméthyl-1,3 butyl)-p-phénylène-diamine ;
   - des agents d'aide à la mise en oeuvre, des agents de plastification.

S'agissant des agents d'aide à la mise en oeuvre, les compositions conformes à l'invention peuvent contenir en outre, en complément du POS multifonctionnalisé de formule (I), des agents de recouvrement de la charge blanche renforçante tels que par exemple une huile silicone hydroxylée, un polyol, un silane hydrolysable, un polyorganosiloxane de recouvrement.

Plus précisément, quand on utilise un pareil agent d'aide à la mise en oeuvre, on fait appel avantageusement à un agent pris dans le groupe formée par :
1) une huile α,ω-(dihydroxy)polydiorganosiloxane de formule : 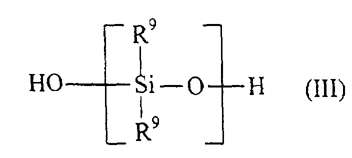 où : r a une valeur suffisante pour donner à l'huile une viscosité dynamique à 25°C comprise entre 5 et 1000 mPa.s, de préférence entre 10 et 200 mPa.s ; et les radicaux organiques R⁹, du fait de leur disponibilité dans les produits industriels, sont des radicaux méthyle, éthyle, propyles et/ou phényle, de préférence au moins 80 % en nombre de ces radicaux R⁹ étant des radicaux méthyle ;
2) un polyalkylèneglycol de formule : 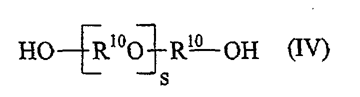 où : s a une valeur suffisante pour donner au composé de formule (IV) une masse moléculaire moyenne en nombre comprise entre 100 et 30.000, de préférence entre 200 et 20.000 ; et les radicaux R¹⁰, identiques ou différents entre eux, représentent chacun un radical alkylène, linéaire ou ramifié, ayant de 1 à 4 atomes de carbone ;
3) un silane hydrolysable de formule

   (R¹¹)ₜSi(E)₄₋ₜ (V)

   où : les symboles R¹¹ représentent chacun un radical alkyle linéaire ou ramifié en C₁ - C₈ (comme par exemple méthyle, éthyle, propyles, butyles), un radical cycloalkyle en C₅ - C₈ (comme par exemple cyclohéxyle), un radical aryle en C₆ - C₁₂ ou aralkyle ayant une partie aryle en C₆ - C₁₂ et une partie alkyle en C₁ - C4 (comme par exemple phényle, xylyle, benzyle, phényléthyle) ; les symboles E sont des groupes hydrolysables et représentent chacun un groupe alkoxy en C₁ - C₁₀ (comme par exemple méthoxy, éthoxy, octyloxy), un groupe aryloxy en C₆ - C₁₂ (comme par exemple phényloxy), un groupe acyloxy en C₁ - C₁₃ (comme par exemple acétoxy), un groupe cétiminoxy en C₁ - C₈ (comme par exemple ON=C(CH₃)(C₂H₅), ON=C(CH₃)₂);
4) un polyorganosiloxane de recouvrement consistant soit dans un POS de formule (II) répondant aux définitions données supra en légende de la formule (II), soit dans un POS de formule : 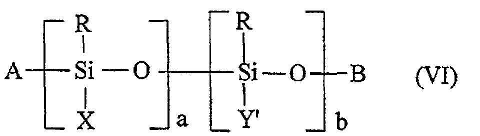 dans laquelle : les symboles A, B, R, X, a et b répondent aux définitions données supra en légende de la formule II) ; et les symboles Y', identiques ou différents entre eux, représentent chacun un groupe alkyle, linéaire ou ramifié, en C7 - C₃₀ (comme par exemple octyle, dodécyle, undécyle, tridécyle) ; les POS de recouvrement de formule (VI) sont des produits qui peuvent être obtenus conformément aux procédés décrits dans le document WO-A-96/16125 et dans la demande de brevet français déposée par la Demanderesse le 6 août 1991 sous le n° 96/10086 dont on a parlé ci-avant ; et
5) un mélange d'au moins deux des agents 1) à 4) précités.

Un pareil agent d'aide à la mise en oeuvre, quand on en utilise un, est employé à raison de 1 à 10 parties en poids, et de préférence 2 à 8 parties, pour 100 parties de charge blanche renforçante.

Le procédé de préparation des compositions d'élastomère(s) comprenant une charge blanche renforçante et une quantité efficace d'agent de couplage peut se faire selon un mode opératoire classique en une ou deux étapes.

Selon le procédé en une étape, on introduit dans un mélangeur interne usuel, par exemple de type BANBURY ou de type BRABENDER, tous les constituants nécessaires à l'exception du (ou des) agent(s) de vulcanisation et éventuellement : du (ou des) accélérateurs et/ou du (ou des) activateur(s). Le résultat de cette première étape de mélange est repris ensuite sur un mélangeur externe, généralement un mélangeur à cylindres, et on y ajoute alors le (ou les) agent(s) de vulcanisation et éventuellement : le (ou les) accélérateur(s) et/ou le (ou les) activateur(s).

Il peut être avantageux pour la préparation de certains articles de mettre en oeuvre un procédé en deux étapes conduites toutes les deux dans un mélangeur interne. Dans la première étape, sont introduits tous les constituants nécessaires à l'exception du (ou des) agent(s) de vulcanisation et éventuellement : du (ou des) accélérateur(s) et/ou du (ou des) activateurs. Le but de la seconde étape qui suit est essentiellement de faire subir au mélange un traitement thermique complémentaire. Le résultat de cette seconde étape est repris également ensuite sur un mélangeur externe pour y ajouter le (ou les) agent(s) de vulcanisation et éventuellement : le (ou les) accélérateur(s) et/ou le (ou les) activateur(s).

Les compositions d'élastomère(s) qui conviennent d'être décrites vont servir à préparer des articles en élastomère(s) possédant un corps comprenant lesdites compositions. Ces compositions sont particulièrement utiles pour préparer des articles consistant dans des supports de moteurs, des pièces de chenilles de véhicule, des semelles de chaussures, des galets de téléphérique, des joints d'appareillages électroménagers et des gaines de câbles.

Les exemples suivants illustrent la présente invention.

### EXEMPLES 1 à 3

Exemples de préparation de POS multifonctionnalisés de formule (I) par mise en oeuvre du procédé selon l'invention,

### 1) Préparation d'un POS de formule (II) à motifs fonctionnels ≡Si-OC₂H₅ et ≡Si-(CH₂)₂-cyclohexényle :

On met en oeuvre le procédé industriel (semi)continu de fabrication du POS à motifs multifonctionnels.

### 1.1) Produits engagés dans le procédé :

Le POS à SiH de départ est une huile polyméthylhydrogénosiloxane à extrémités triméthylsilyles comprenant environ 1584 milliéquivalents de motifs ≡SiH pour 100 g d'huile.

L'alcool de formule XH, dont dérive la fonction alkoxyle X, est 'éthanol C₂H₅OH.

Le catalyseur est une solution dans le divinyltétraméthyldisiloxane d'un complexe du platine à 10 % en poids de platine métal ligandé par du divinyltétraméthyldisiloxane (catalyseur de Karstedt).

Le composé organique insaturé dont dérive la fonction Y est le vinyl-4 cyclohexène-1.

### 1.2) Paramètres opératoires:

- débit alimentation en POS à SiH 5,3 kg/h
- débit alimentation éthanol + catalyseur 4,5 kg/h
- concentration platine dans l'éthanol 20 ppm
- température entrée POS à SiH 47°C
- température entrée éthanol + catalyseur 50°C
- température masse pied du réacteur A 72°C
- débit gazeux 1,08 m³/h
- degré d'éthoxylation ∼ 0,63 (*)
(*) cette valeur est déterminée à partir de l'analyse RMN du silicium du POS de formule (II) ; elle signifie que, sur 100 motifs ≡ SiH initiaux, environ 63 se sont transformés en motifs ≡Si-OC₂H₅
- quantité de vinylcyclohexène employé pour 10 heures de marche du réacteur A 51,3 kg
- température masse dans le réacteur B 70°C.

### 1.3) Fonctionnement :

Le POS à SiH, d'une part, et l'éthanol + le catalyseur au platine, d'autre part, sont introduits dans le compartiment 5 par les canalisations 11 et 12 respectivement. Les débits d'alimentation sont précisés ci-dessus.

La réaction de déshydrogénocondensation intervient dans le compartiment principal 5 avec dégagement d'hydrogène et de volatils (éthanol essentiellement) qui passent dans la chambre haute 3 par l'intermédiaire du tube 13. Les volatils sont condensés par le condenseur 18 et récupérés par la canalisation 20, puis recyclés en les acheminant dans le compartiment principal 5. L'hydrogène, séparé des volatils condensables, s'échappe par la canalisation 19 et est récupéré.

Après une certaine durée d'alimentation, le milieu réactionnel liquide atteint son niveau de trop-plein dans le compartiment 5. Ce niveau correspond à une certaine durée de séjour, égale en l'espèce à 2 min 48 s et se déverse dans le compartiment inférieur 6. Le volume de débordement liquide du compartiment 5 est de 470 ml, tandis que, pour les trois autres compartiments (étages) 6, 7, 8, ce volume est de 630 ml. Le système de déversement en cascade du milieu réactionnel liquide se poursuit dans les compartiments inférieurs 7 et 8 et on recueille, in fine dans le culot 9, le POS à motifs ≡Si-OC₂H₅ et ≡SiH dont le taux de transformation est d'environ 0,63. Ce taux est régulé grâce à un système d'asservissement comprenant un capteur à hydrogène et une unité de calcul déterminant en continu le taux de transformation, ce qui permet de le réguler en jouant sur les débits en cours de fonctionnement. On pourrait également régler les hauteurs de débordement des plateaux 40 à 43.

Le POS à motifs ≡Si-OC₂H₅ et ≡SiH ainsi obtenu est transféré en continu par la canalisation 10 dans le réacteur B, pour être soumis à l'hydrosilylation le rendant inoffensif et le transformant en POS de formule (II) à motifs ≡Si-OC₂H₅ et ≡Si-(CH₂)₂-cyclohexényle. L'éthanol et le vinylcyclohexène volatilisés sont condensés puis récupérés et éventuellement recyclés grâce aux moyens 23.

On récupère le POS de formule (II) par vidange du réacteur 20 à l'aide de la canalisation 22 ; il s'agit d'une huile silicone limpide de viscosité 300 mPa.s à 25°C.

Cette huile a été soumise aussi à une analyse par RMN de silicium. Il s'agit là d'un moyen d'examen performant pour la détermination de la structure et de la microstructure de copolymères silicones ; la RMN du silicium (²⁹ Si) a ainsi permi de détecter la présence :
- à côté des motifs, situés dans la chaîne linéaire, de formules :
- (CH₃)(OC₂H₅)SiO_{2/2} [notés T(OEt)]
-

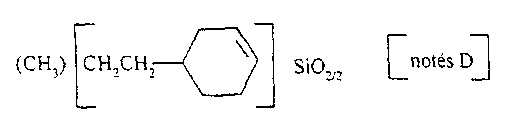

- des motifs, situés en bouts de chaîne, de formules :
- (CH₃)₃SiO_{1/2} [notés M]
- (CH₃)₂(OC₂H₅)SiO_{1/2} [notés D(OEt)]
- (CH₃)(OC₂H₅)₂SiO_{1/2} [notés T(OEt)₂]

- et de motifs [notés T] de formule CH₃SiO_{3/2} en quantité très minoritaire.
L'analyse RMN ²⁹Si révèle la distribution ci-après des différents motifs

| Motifs | % molaire (*) |
|---|---|
| M | ∼ 3,86 |
| D(OEt) | ∼ 1,32 |
| D | ∼ 33,90 |
| T(OEt)₂ | ∼ 1,40 |
| T(OEt) | ∼ 58,74 |
| T | ∼ 0,78 |

| | |
|---|---|
| (*) la valeur indiquée exprime le nombre de motifs pour 100 atomes de silicium. | |

En tenant compte des groupements terminaux de types M, D(OEt) et T(OEt)₂, l'analyse RMN ²⁹Si permet d'attribuer à l'huile la formule moyenne suivante : 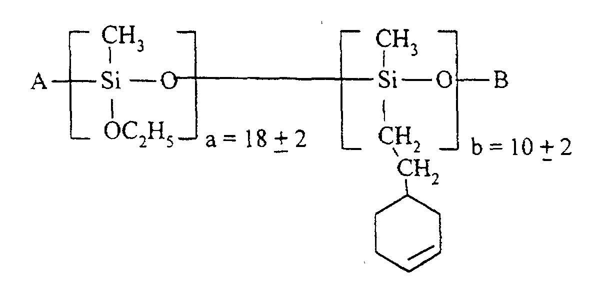 avec pour l'ensemble des groupements terminaux A et B la composition molaire donnée ci-après :

| Groupements terminaux | Composition |
|---|---|
| (CH₃)₃SiO- et/ou -Si(CH₃)₃ | ∼ 58,7 % |
| (CH₃)₂(OC₂H₅)SiO- et/ou -Si(CH₃)₂(OC₂H₅) | ∼ 20,1 % |
| (CH₃)(OC₂H₅)₂SiO- et/ou -Si(CH₃)(OC₂H₅)₂ | ∼ 21,2 % |

### 2) Préparation de plusieurs POS de formule (I) comprenant des motifs fonctionnels ≡Si-OC₂H₅ et ≡Si-(éthylène-cyclohexylène)-SH :

Dans un réacteur en acier inoxydable de 2 litres, équipé d'un système d'agitation et d'un système d'alimentation de gaz H₂S, dont le volume intérieur est maintenu sous une atmosphère d'azote sec, on charge : V1 g de toluène sec, puis M1 g de l'huile silicone obtenue à l'issue de l'étape 1) précédente.

On effectue ensuite un balayage du volume intérieur du réacteur ainsi chargé avec de l'H₂S. Le mélange est agité et on porte la température du milieu réactionnel à T1°C, sous une pression de H₂S égale à P1 exprimée en Pa. On coule ensuite progressivement, en t1 minutes, une solution de catalyseur à base de M2 g d'AIBN et de V2 g de toluène sec. En fin de coulée, le mélange réactionnel est laissé à réagir pendant t2 minutes à la température T1°C, sous agitation.

Au bout de la durée t2, on purge l'appareillage à l'aide d'un courant d'azote et on procède ensuite à l'évaporation du solvant dans évaporateur rotatif en opérant un chauffage à environ 80 - 100°C, sous une pression réduite d'environ 7.10² Pa, pendant 1 heure 30 minutes.

On récupère ainsi M3 g d'une huile silicone légèrement jaune qui est analysée par RMN du proton et du ²⁹Si.

Le tableau suivant rassemble les conditions de marche du procédé pour chacune des préparations réalisées :

| Exemple | V1 g | M1 g | T1 °C | P1 10⁵Pa | t1 min | M2 g | V2 g | t2 min | M3 g |
|---|---|---|---|---|---|---|---|---|---|
| 1 | 415,14 | 140,02 | 70 | 13 | 60 | 4,22 | 214,84 | 130 | 121 |
| 2 | 403,98 | 140,59 | 70 | 13 | 90 | 4,20 | 210,07 | 240 | 119 |
| 3 | 415,30 | 140,09 | 70 | 13 | 60 | 4,21 | 210,77 | 120 | 120 |

Par analyses RMN ²⁹Si réalisées sur les POS de formule (I) des exemples 1 à 3, on trouve la distribution moyenne ci-après des différents motifs :

| Motifs | % molaire |
|---|---|
| M | ∼ 3,58 |
| D(OEt) | ∼ 1,22 |
| D (*) | ∼ 33,92 |
| T(OEt)₂ | ∼ 1,31 |
| T(OEt) | ∼ 59,43 |
| T | ∼ 0,54 |

| | |
|---|---|
| (*) D représente ici les motifs fonctionnels cycliques (n, p, q) situés dans la chaîne. | |

En tenant compte des groupements terminaux de types M, D(OEt) et T(OEt)₂, l'analyse RMN ²⁹Si permet d'attribuer aux huiles des exemples 1 à 3 la formule moyenne suivante : 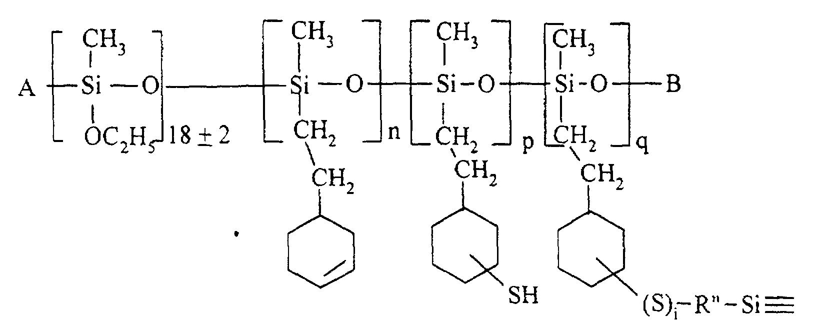 ou:
• n + p + q = 10 ± 2 (la répartition molaire des paramètres n, p et q s'établissant comme indiqué ci-après)
• 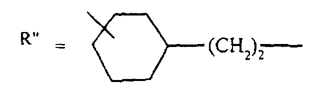 (la valence libre du méthylène étant liée à l'atome de silicium) ;
• l'ensemble des groupements terminaux A et B présente la composition molaire moyenne donnée ci-après :

| Groupements terminaux | Composition moyenne |
|---|---|
| (CH₃)₃SiO- et/ou -Si(CH₃)₃ | ∼ 58,6% |
| (CH₃)₂(OC₂H₅)SiO- et/ou -Si(CH₃)₂(OC₂H₅) | ∼ 20,0 % |
| (CH₃)(OC₂H₅)₂SiO- et/ou -Si(CH₃)(OC₂H₅)₂ | ∼ 21,4 % |

L'analyse RMN du proton a permis de déterminer la composition molaire suivante, rassemblée dans le tableau ci-après, pour les motifs fonctionnels cycliques :

| Exemple | Composition molaire en % | | |
|---|---|---|---|
| | n | p | q |
| 1 | 18,9 | 72,5 | 8,6 |
| 2 | 17,9 | 73,3 | 8,8 |
| 3 | 15,8 | 75,2 | 9,0 |

### EXEMPLES 4 et 5

Ces exemples illustrent l'utilisation et le comportement du POS multifonctionnalisé de formule (I) préparé dans l'exemple 2 (POS-2) dans : d'une part (exemple 4) une composition d'élastomères représentative de formulations pour semelles de chaussures, et d'autre part (exemple 5) une composition d'élastomère(s) représentative de formulations pour pièces de chenilles de véhicules, lesdites compositions étant renforcées par une charge blanche à base de silice de précipitation hautement dispersible.

### 1) Constitution des compositions :

Dans un mélangeur interne de type BRABENDER, on prépare les compositions suivantes dont la constitution, exprimée en parties en poids, est indiquée dans le tableau I donné ci-après :

**Tableau I**

| Compositions | | Semelles de chaussures | | Pièces de chenilles | |
|---|---|---|---|---|---|
| | | Témoin 1 | Exemple 4 | Témoin 2 | Exemple 5 |
| Caoutchouc NR (SMR 5L) | (1) | -- | -- | 85 | 85 |
| Caoutchouc SBR 1502 | (2) | 80 | 80 | -- | -- |
| Caoutchouc BR 1220 | (3) | 20 | 20 | 15 | 15 |
| Silice | (4) | 50 | 50 | 65 | 65 |
| Oxyde de zinc | (5) | 2 | 2 | 5 | 5 |
| Acide stéarique | (6) | 2 | 2 | 2 | 2 |
| Cire microcristalline | (7) | -- | -- | 1 | 1 |
| Norsolène SP 70 | (8) | 8 | 8 | -- | -- |
| PEG 4000 | (9) | 2,5 | 2,5 | 3 | 3 |
| MBTS | (10) | 1 | 1 | -- | -- |
| CBS | (11) | 1,2 | 1,2 | -- | -- |
| TMTD | (12) | 0,15 | 0,15 | -- | -- |
| TBBS | (13) | -- | -- | 2 | 2 |
| DPG | (14) | -- | -- | 1,4 | 1,4 |
| Soufre | (15) | 2,1 | 2,1 | 1,7 | 1,7 |
| POS-2 | | -- | 4 | -- | 4 |

| | | | | | |
|---|---|---|---|---|---|
| (1) Caoutchouc naturel, d'origine Malaisienne, commercialisé par la Société SAFIC-ALCAN ; | | | | | |
| (2) Copolymère styrène-butadiène commercialisé par la Société SHELL CHIMIE ; | | | | | |
| (3) Polybutadiène à haut taux de produits d'additions cis-1,4 commercialisé par la Société SMPC ; | | | | | |
| (4) Silice Zéosil 165 GR, se représentant sous forme de granulés de dimension maximale moyenne de 8 mm, commercialisée par la Société RHONE-POULENC CHIMIE ; surface CTAB : environ 160 m²/g, surface BET : environ 170 m²/g, rapport BET/CTAB : environ 1,06 ; | | | | | |
| (5) et (6) Activateur de vulcanisation ; | | | | | |
| (7) Agent d'aide à la mise en oeuvre qui est une cire commercialisée par la Société LA CERESINE sous la marque ® CERELUX 120 ; | | | | | |
| (8) Plastifiant qui est une résine aromatique d'origine pétrolière commercialisée par la Société NORSOLOR ; | | | | | |
| (9) Polyéthylèneglycol de poids moléculaire 4000 (agent d'interface silice / caoutchouc) ; | | | | | |
| (10) Disulfure de mercaptobenzothiazole (accélérateur de vulcanisation) ; | | | | | |
| (11) N-cyclohexyl-2-benzothiazyl-sulfénamide (accélérateur de vulcanisation) ; | | | | | |
| (12) Disulfure de tétraméthylthiurame (accélérateur de vulcanisation) ; | | | | | |
| (13) N-tertiobutyl-2-benzothiazyl-sulfénamide (accélérateur de vulcanisation) ; | | | | | |
| (14) Diphényl guanidine (accélérateur de vulcanisaiton) ; | | | | | |
| (15) Agent de vulcanisation. | | | | | |

### 2) Préparations des compositions :

Les compositions représentatives de formulations pour semelles de chaussures sont préparées, selon un procédé en une étape, de la manière suivante :

Dans un mélangeur interne de type BRABENDER, on introduit les divers constituants dans l'ordre, aux temps et aux températures indiqués ci-après :

| Temps | Température | Constituants |
|---|---|---|
| 0 minute | 100°C | Elastomères (SBR, BR) |
| 2 minutes | | Silice, PEG 4000, Norsolène et acide stéarique |
| 4 minutes | | POS-2 |
| 5 minutes 30 secondes | | Oxyde de zinc |

La vidange du mélangeur se fait quand la température atteint 160°C (c'est-à-dire au bout de 7 minutes environ).

Le mélange obtenu est introduit ensuite sur un mélangeur à cyclindres, maintenu à 30°C, pour y être calendré. Dans ce mélangeur, on introduit le MBTS, le CBS, le TMTD et le soufre. Après homogénéisation et trois passages au fin, le mélange final est calandré sous la forme de feuilles de 2,5 à 3 mm d'épaisseur.

Les compositions représentatives de formulations pour pièces de chenilles sont préparées, selon un procédé en deux étapes, de la manière suivante :

Dans un mélangeur interne de type BRABENDER, on réalise successivement les deux étapes indiquées ci-après :

| Temps | Température | Constituants |
|---|---|---|
| * étape 1 : | | |
| 0 minute | 100°C | Elastomère SMR |
| 2 minutes | | Elastomère BR |
| 3 minutes | | 2/3 de la silice, PEG 4000 et cire |
| 4 minutes 30 secondes | | 1/3 de la silice et acide stéarique |
| 5 minutes 30 secondes | | POS-2 |
| 7 minutes | 160°C | Vidange du mélangeur |

| * étape 2: | | |
|---|---|---|
| 0 minute | 100°C | Mélange issu de l'étape 1 |
| 1 minute | | Oxyde de zinc |
| 3 minutes | 160°C | Récupération du mélange |

Ensuite le mélange obtenu à l'issue de l'étape 2 est introduit sur un mélangeur à cylindres pour y être calendré comme indiqué précédemment. Dans ce mélangeur, on introduit le TBBS, le DPG et le soufre.

### 3) Propriétés rhéologiques :

Les mesures sont réalisées sur les compositions à l'état cru. On a porté dans le tableau suivant Il les résultats concernant le test de viscosité MONSANTO qui est conduit à 170°C en utilisant le rhéomètre MONSANTO 100 S.

Selon ce test, la composition à tester est placée dans la chambre d'essai régulée à la température de 170°C, et on mesure le couple résistant, opposé par la composition, à une oscillation de faible amplitude d'un rotor biconique inclus dans la chambre d'essai, la composition remplissant complètement la chambre considérée. A partir de la courbe de variation du couple en fonction du temps, on détermine : le couple minimum qui reflète la viscosité de la composition à la température considérée ; le couple maximum qui reflète le taux de réticulation entraîné par l'action du système de vulcanisation ; et le temps (T-90) nécessaire pour obtenir un état de vulcanisation correspondant à 90 % de la vulcanisation complète (ce temps est pris comme optimum de vulcanisation).

**Tableau II**

| Rhéologie MONSANTO | Semelles de chaussures | | Pièces de chenilles | |
|---|---|---|---|---|
| | Témoin 1 | Exemple 4 | Témoin 2 | Exemple 5 |
| Couple mini | 20,4 | 19,3 | 25,7 | 14,7 |
| Couple maxi | 105,6 | 106 | 106,7 | 101,1 |
| Delta couple | 85,2 | 86,7 | 81 | 86,4 |
| T-90 | 6 min 13 s | 7 min 15 s | 6 min 40 s | 3 min 21 s |

### 4) Propriétés mécaniques :

Les mesures sont réalisées sur les compositions vulcanisées à l'optimum (température : 170°C ; durées pour chaque composition : temps T-90 indiqués dans le tableau II).

Les propriétés mesurées et les résultats obtenus sont présentés dans le tableau III suivant.

**Tableau III**

| Propriétés mécaniques | | Semelles de chaussures | | Pièces de chenilles | |
|---|---|---|---|---|---|
| | | Témoin 1 | Exemple 4 | Témoin 2 | Exemple 5 |
| Module 10 % | (1) | 0,51 | 0,65 | 0,7 | 0,88 |
| Module 100 % | (1) | 1,25 | 2,32 | 1,58 | 2,34 |
| Module 300 % | (1) | 3,5 | 9,3 | 4,9 | 8,6 |
| Indice de renforcement | (2) | 2,8 | 4 | 3,1 | 3,67 |
| Résistance rupture | (1) | 15,3 | 17,7 | 20,5 | 20,6 |
| Dureté Shore A | (3) | 66 | 66 | 72 | 73 |
| Résistance abrasion | (4) | 102 | 76 | 163 | 140 |

| | | | | | |
|---|---|---|---|---|---|
| (1) Les essais de traction sont réalisés conformément aux indications de la norme NF T 46-002 avec des éprouvettes de type H2. Les modules 10 %, 100 %, 300 % et la résistance à la rupture sont exprimés en MPa. | | | | | |
| (2) L'indice de renforcement correspond au rapport : module 300 % / module 100 %. | | | | | |
| (3) La mesure est réalisée selon les indications de la norme ASTM D 3240. La valeur donnée est mesurée à 15 secondes. | | | | | |
| (4) La mesure est réalisée selon les indications de la norme NF T 46-012 en utilisant la méthode 2 avec porte éprouvette tournant. La valeur mesurée est la perte de substance (en mm³) à l'abrasion ; plus elle est faible et meilleure est la résistance à l'abrasion. | | | | | |

D'une manière générale, les compositions contenant le POS-2 sont dotées, par rapport aux compositions comparables qui n'en contiennent pas, de modules sensiblement plus élevés et de résistance à l'abrasion également sensiblement améliorées. Les duretés des vulcanisats ne sont pas modifiées. Cette augmentation des modules et cette amélioration de l'abrasion démontrent indubitablement que les POS multifonctionnalisés de formule (I), et en particulier ceux comprenant des motifs fonctionnels ≡Si-(chaîne à groupement SH secondaire), possédent un fort pouvoir couplant permettant de lier chimiquement la surface de la silice au caoutchouc.

### EXEMPLES 6 à 9

Exemples de préparation de POS multifonctionnalisés de formule (I) par mise en oeuvre du procédé selon l'invention.

### 1) Préparation d'un POS de formule (II) à motifs ≡Si-OC₂H₅ et ≡Si-(CH₂)₂-cyclohexényle:

On met en oeuvre le procédé en discontinu.

Le POS à SiH de départ est une huile polyméthylhydroxygénosiloxane à extrémités triméthylsilyles comprenant environ 1438 milliéquivalents de motifs ≡SiH pour 100 g d'huile.

La réaction de déshydrogénocondensation est réalisée dans un réacteur de 3 litres équipé d'un système d'agitation mécanique et dont le volume intérieur est maintenu sous une atmosphère d'azote sec.

350 g de toluène sont introduits dans le réacteur ainsi que 0,08 g de catalyseur de Karstedt. Par l'intermédiaire de 2 pompes de coulée, l'éthanol (155,9 g) et l'huile polyméthylhydrogénosiloxane (400 g) sont introduits à température ambiante (25°C) sur une période de 5 heures et 10 minutes. La température du milieu évolue progressivemen tde 18,7°C à 39,3°C.

Le milieu réactionnel ainsi obtenu est récupéré, puis il est ensuite coulé sur une période de 4 heures 45 minutes sur un mélange, préchauffé à 74°C, constitué de 100 g d'éthnol, de 308,5 g de vinyl-4 cyclohexène-1 et de 0,08 g du catalyseur de Karstedt. Pendant la coulée, la température évolue de 74°C à 79°C. Le chauffage est maintenu 5 heures à 79°C et au bout de ce temps, la totalité des motifs fonctionnels ≡SiH a été consommée. Le mélange réactionnel est ensuite dévolatilisé en opérant un chauffage à 70°C, sous une pression réduite de 5,32.10² Pa, pendant 5 heures. On récupère ainsi 760,3 g d'une huile silicone limpide.

Cette huile a été soumise aussi à une analyse par la RMN du silicium (²⁹ Si) qui a ainsi permi de détecter la présence :
- à côté des motifs, situés dans la chaîne linéaire, de formules :
- (CH₃)(OC₂H₅)SiO_{2/2} [notés T(OEt)]
-

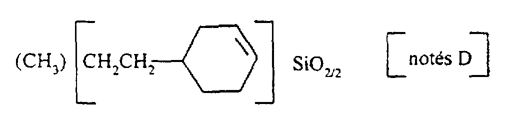

- des motifs, situés en bouts de chaîne, de formules :
- (CH₃)₃SiO_{1/2} [notés M]
- (CH₃)₂(OC₂H₅)SiO_{1/2} [notés D(OEt)]

- et de motifs [notés T] de formule CH₃SiO_{3/2} en quantité très minoritaire.
L'analyse RMN ²⁹Si révèle la distribution ci-après des différents motifs :

| Motifs | % molaire (*) |
|---|---|
| M | ∼ 10,5 |
| D(OEt) | ∼ 1,0 |
| D | ∼ 36,0 |
| T(OEt) | ∼ 51,5 |
| T | ∼ 1,0 |

| | |
|---|---|
| (*) la valeur indiquée exprime le nombre de motifs pour 100 atomes de silicium. | |

En tenant compte des groupements terminaux de types M et D(OEt), l'analyse RMN ²⁹Si permet d'attribuer à l'huile la formule moyenne suivante : 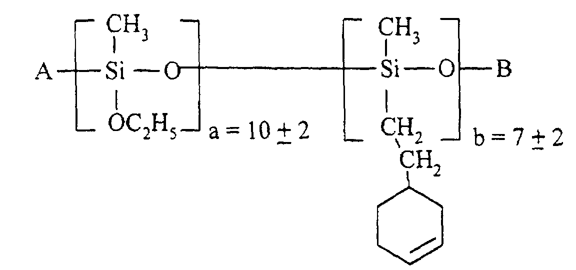 avec pour l'ensemble des groupements terminaux A et B la composition molaire donnée ci-après :

| Groupements terminaux | Composition |
|---|---|
| (CH₃)₃SiO- et/ou -Si(CH₃)₃ | ∼ 91,3% |
| (CH₃)₂(OC₂H₅)SiO- et/ou -Si(CH₃)₂(OC₂H₅) | ∼ 8,7 % |

### 2) Préparation de plusieurs POS de formule (I) comprenant des motifs fonctionnels ≡Si-OC₂H₅ et ≡Si-(éthylènecyclohexényle)-SH :

On opère comme indiqué ci-avant dans les exemples 1 à 3, partie 2).

Le tableau suivant rassemble les conditions de marche du procédé pour chacune des préparations réalisées :

| Exemple | V1 g | M1 g | T1 °C | P1 10⁵Pa | t1 min | M2 g | V2 g | t2 min | M3 g |
|---|---|---|---|---|---|---|---|---|---|
| 6 | 428,50 | 140,95 | 75 | 13 | 60 | 4,04 | 197,81 | 60 | 119,8 |
| 7 | 425,02 | 140,02 | 75 | 13 | 90 | 4,03 | 200,13 | 60 | 119,0 |
| 8 | 425,16 | 140,21 | 75 | 13 | 60 | 4,03 | 200,11 | 60 | 119,2 |
| 9 | 425,20 | 140,66 | 75 | 13 | 60 | 4,02 | 204,12 | 60 | 119,5 |

Les quatre POS de formule (I) des exemples 6 à 9 sont regroupés pour former le lot qui sera dénommé, dans ce qui suit, par l'appellation "POS-(6 à 9)". L'analyse RMN²⁹Si révèle pour ce lot la distribution suivante des différents motifs :

| Motifs | % molaire (*) |
|---|---|
| M | ∼ 10 |
| D(OEt) | traces |
| D (*) | ∼ 36 |
| T(OEt) | ∼ 53 |
| T | <1 |

| | |
|---|---|
| (*) D représente ici les motifs fonctionnels cycliques (n, p, q) situés dans la chaîne. | |

En tenant compte des groupements terminaux de types M et D(OEt), l'analyse RMN ²⁹Si permet d'attribuer au lot POS-(6 à 9) la formule moyenne suivante : 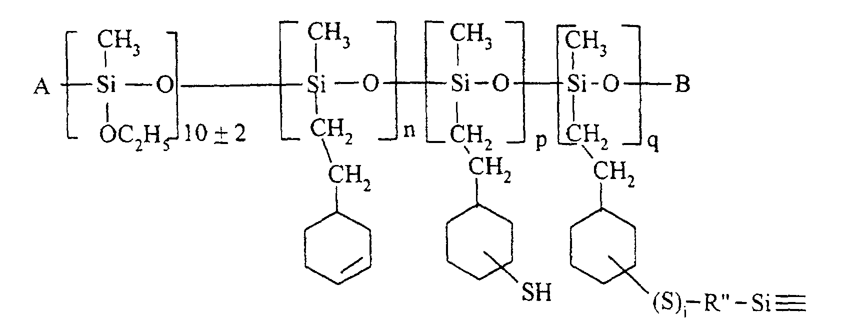 où :
• n + p + q = 7 ± 2 (la répartition molaire des paramètres n, p et q s'établissant comme indiqué ci-après)
• 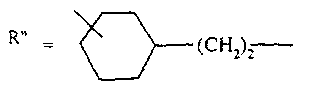 (la valence libre du méthylène étant liée à l'atome de silicium) ;
• l'ensemble des groupements terminaux A et B présente la composition molaire moyenne donnée ci-après :

| Groupements terminaux | Composition moyenne |
|---|---|
| (CH₃)₃SiO- et/ou -Si(CH₃)₃ | ∼ 100 % |
| (CH₃)₂(OC₂H₅)SiO- et/ou -Si(CH₃)₂(OC₂H₅) | traces |

L'analyse RMN du proton a permis de déterminer la composition molaire suivante, rassemblée dans le tableau ci-après, pour les motifs fonctionnels cycliques :

| POS-(6 à 9) | Composition molaire en % | | |
|---|---|---|---|
| | n | p | q |
| | 34,3 | 62,8 | 2,9 |

### EXEMPLES 10 à 12

Ces exemples illustrent l'utilisation et le comportement :
- exemple 10 : du POS muitifonctionnalisé de formule (I) correspondant au regroupement des POS préparés dans les exemples 6 à 9 et dénommé POS -(6 à 9),
- exemple 11 : d'une association du POS-(6 à 9) avec un agent d'aide à la mise en oeuvre consistant dans une huile α,ω-dihydroxypolydiméthylsiloxane de viscosité égale à 50 mPa.s (huile 48V50),
- exemple 12 : d'une association du POS-(6 à 9) avec un agent d'aide à la mise en oeuvre consistant dans un POS de recouvrement de formule (VI) comprenant des motifs fonctionnels ≡Si-OC₂H₅ et ≡Si-octyle (POS-12),
dans une composition d'élastomère, renforcée par une charge blanche, représentative de formulations pour semelles de chaussures.

### 1) Constitution des compositions :

Dans un mélangeur interne de type BRABENDER, on prépare les compositions suivantes dont la constitution, exprimée en parties en poids, est indiquée dans le tableau IV donné ci-après :

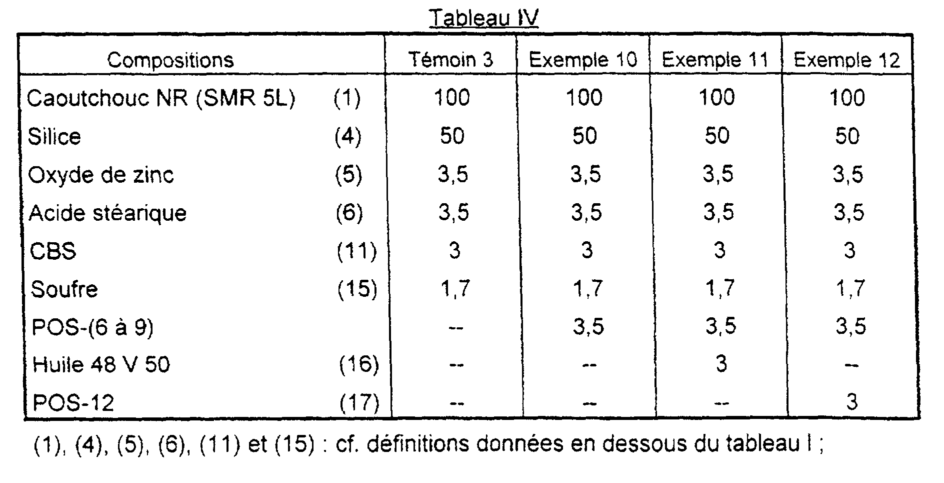

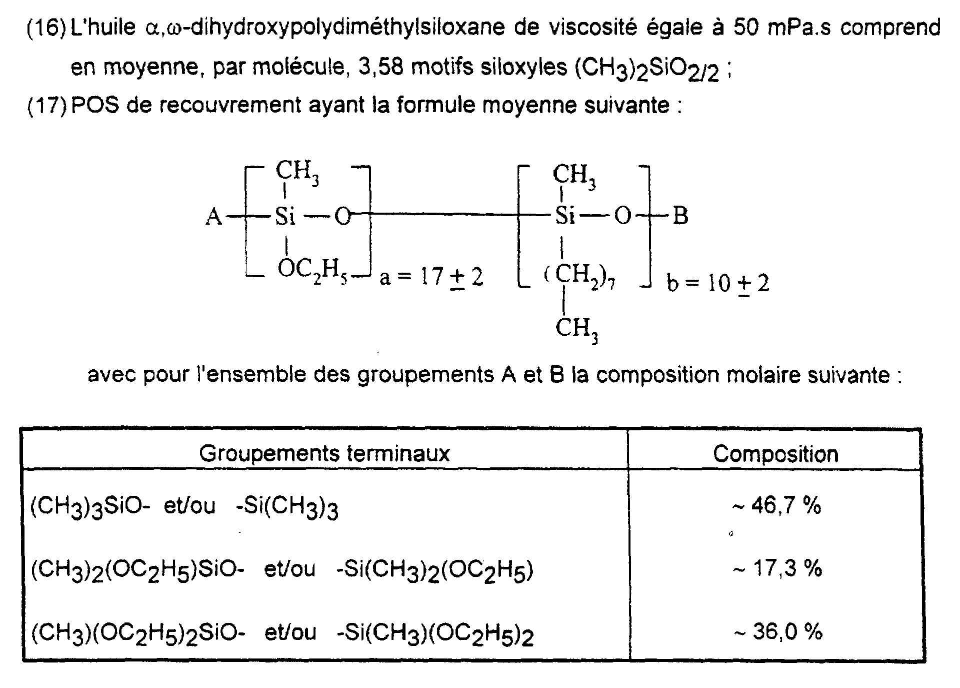

Pour préparer le POS-12, on procède comme indiqué dans les exemples 1 à 3, partie 1) en remplaçant le vinyl-4 cyclohexène-1 par l'octène-1.

### 2) Préparation des compositions :

Les compositions représentatives de formulations pour semelles de chaussures sont préparées, selon un procédé en une étape, de la manière suivante :

Dans un mélangeur interne de type BRABENDER, on introduit les divers constituants dans l'ordre, aux temps et aux températures indiqués ci-après :

| Temps | Température | Constituants |
|---|---|---|
| 0 minute | 80°C | Elastomère |
| 2 minutes | 100°C | 2/3 de la silice et le cas échéant : POS-(6 à 9) pris seul ou en association avec huile 48 V 50 ou POS-12 |
| 4 minutes | 120°C | 1/3 de la silice + acide stéarique + oxyde de zinc |

Le mélange obtenu est introduit ensuite sur un mélangeur à cyclindres, maintenu à 60°C, pour y être calendré. Dans ce mélangeur, on introduit le CBS et le soufre. Après homogénéisation et trois passages au fin, le mélange final est calandré sous la forme de feuilles de 2,5 à 3 mm d'épaisseur.

### 3) Propriétés rhéologiques :

Les mélanges à l'état cru sont évalués selon le test MONSANTO, réalisé à 170°C comme indiqué ci-avant dans les exemples 4 et 5, partie 3). A partir de la courbe de variation du couple en fonction du temps de test, on détermine - outre le couple minimum, le couple maximum (et le delta-couple), et le temps T-90 - un temps de grillage TS-2 correspondant au temps nécessaire pour avoir une remontée de 2 points au-dessus du couple minimum à la température considérée (170°C) et qui reflète le temps pendant lequel il est possible de mettre en oeuvre les mélanges crus à cette température sans avoir d'initiation de la vulcanisation.

Les résultats obtenus sont indiqués dans le tableau V.

**Tableau V**

| Rhéologie MONSANTO | Témoin 3 | Exemple 10 | Exemple 11 | Exemple 12 |
|---|---|---|---|---|
| Couple mini | 13,8 | 9 | 6,5 | 7,2 |
| Couple maxi | 83,4 | 93,5 | 100,5 | 98,26 |
| Delta-couple | 69,6 | 84,5 | 94,0 | 91,0 |
| TS-2 | 12 min 40 s | 14 min | 8 min 50 s | 13 min 30 s |
| T-90 | 21 min 35 s | 21 min 40 s | 12 min 45 s | 19 min 20 s |

### 4) Propriétés mécaniques des vulcanisats :

Les mesures sont réalisées sur les compositions vulcanisées à l'optimum (température : 170°C ; durées pour chaque composition : temps T-90 indiqués dans le tableau V).

Les propriétés mesurées et les résultats obtenus sont rassemblés dans le tableau VI suivant :

**Tableau VI**

| Propriétés mécaniques | | Témoin 3 | Exemple 10 | Exemple 11 | Exemple 12 |
|---|---|---|---|---|---|
| Module 100 % | (1) | 1,35 | 2,5 | 2,7 | 2,45 |
| Module 300 % | (1) | 4,3 | 9,1 | 9,6 | 9,1 |
| Résistance rupture | (1) | 23 | 23,8 | 22,8 | 25,3 |
| Allongement % | (1) | 750 | 590 | 520 | 615 |
| Dureté Shore A | (3) | 61 | 66 | 67 | 61 |
| Résistance abrasion | (4) | 175 | 131 | 142 | 145 |

| | | | | | |
|---|---|---|---|---|---|
| (1), (3) et (4) : cf. définitions données en dessous du tableau III | | | | | |

Quand un POS multifonctionnalisé de formule (I) est utilisé en association avec un agent d'aide à la mise en oeuvre, comme notamment une huile silicone hydroxylée ou un POS de recouvrement de formule (VI), on peut constater : au niveau des mélanges crus (tableau V), une diminution additionnelle de la viscosité, et au niveau des propriétés des vulcanisats (tableau VI) une amélioration additionnelle possible des modules avec conservation de l'amélioration de la résistance à l'abrasion.

## Revendications

1. Procédé de préparation de polyorganosiloxanes (POS) multifonctionnalisés, comprenant des fonctions polaires alkoxyles et des fonctions comportant chacune un groupement thiol SH, qui sont des copolymères linéaires, statistiques, séquencés ou à bloc, de formule moyenne suivante : 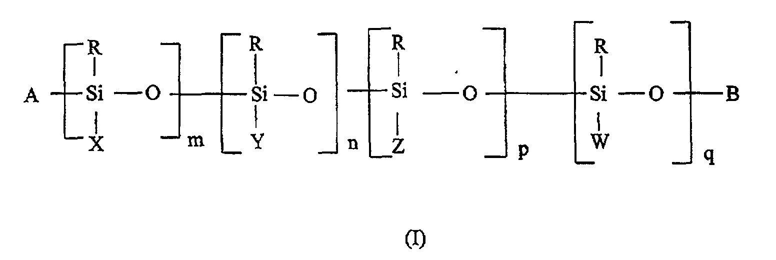 dans laquelle :
- il n'y a pas plus de 3 % de motifs autres que les motifs définis dans la formule (I) - c'est-à-dire les motifs RXSiO_{2/2}, RYSiO_{2/2}, RZSiO_{2/2}, RWSiO_{2/2} et les motifs constitutifs des groupements terminaux A et B - lesdits motifs autres consistant dans des motifs T comprenant le motif RSiO_{3/2} et/ou dans des motifs Q = SiO_{4/2}, les % indiqués exprimant le nombre de motifs T et/ou Q pour 100 atomes de silicium ;
- les symboles R, identiques ou différents entre eux, représentent chacun un radical alkyle, linéaire ou ramifié, ayant de 1 à 6 atomes de carbone ou un radical phényle ;
- les symboles X, identiques ou différents entre eux, représentent chacun un radical alkoxyle, linéaire ou ramifié, ayant de 1 à 15 atomes de carbone ;
- les symboles Y, identiques ou différents entre eux, représentent chacun une chaîne R' incluant une insaturation éthylénique, ladite chaîne étant liée à l'atome de silicium par une liaison Si-C où :
+ la chaîne R' possède de 2 à 30 atomes de carbone et éventuellement un ou plusieurs hétéroatome(s) oxygéné(s),
+ l'insaturation éthylénique de R' est :
→ soit présente en terminaison de chaîne et du type : 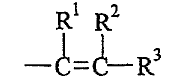 où les symboles R¹, R² et R³, identiques ou différents entre eux, représentent chacun un atome d'hydrogène ou un radical alkyle, linéaire ou ramifié, ayant de 1 à 3 atomes de carbone,
→ soit présente dans une position intermédiaire et du type : 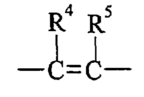 où les symboles R⁴, R⁵, identiques ou différents entre eux, représentent chacun un atome d'hydrogène ou un radical alkyle, linéaire ou ramifié, ayant de 1 à 3 atomes de carbone, ladite position intermédiaire pouvant être située sur une partie cyclique ou polycyclique de la chaîne R' consistant dans un ou plusieurs cycle(s) ayant de 5 à 12 chaînons ;
- les symboles Z, identiques ou différents entre eux, représentent chacun une chaîne R" liée à un groupement SH, ladite chaîne étant attachée à l'atome de silicium par une liaison Si-C, où :
+ la chaîne R" dérive de la chaîne R' définie supra par addition d'un atome d'hydrogène et d'un groupement SH respectivement sur l'un et l'autre des atomes de carbone doublement liés entre eux de l'insaturation éthylénique,
+ le groupement SH est :
→ soit présent en terminaison de chaîne et du (ou des) type(s) suivant(s) : 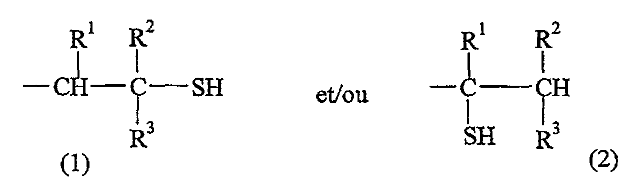 où les symboles R¹, R² et R³ sont tels que définis supra,
→ soit présent dans une position intermédiaire et du (ou des) type(s) suivant(s) : 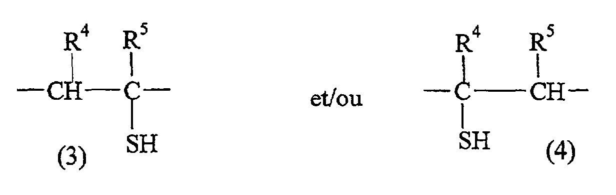 où les symboles R⁴ et R⁵ sont tels que définis supra, ladite position intermédiaire pouvant être située sur une partie cyclique ou polycyclique de la chaîne consistant dans un ou plusieurs cycle(s) ayant de 5 à 12 chaînons ;
- les symboles W, identiques ou différents entre eux, représentent chacun un enchaînement -R"-(S)ᵢ-R"-Si≡ où :
+ i est un nombre entier ≥ 1,
+ le symbole de droite Si≡ représente un atome de silicium appartenant à une autre chaîne polyorganosiloxane ou à la même chaîne polyorganosiloxane ;
- les symboles m, n, p et q représentent chacun des nombres entiers ou fractionnaires, avec les conditions complémentaires selon lesquelles :
+ la somme m + n + p + q se situe dans l'intervalle allant de 2 à 300,
+ m se situe dans l'intervalle allant de 1 à 150,
+ la somme n + p + q se situe dans l'intervalle allant de 1 à 150,
+ n se situe dans l'intervalle allant de 0 à 85,
+ p se situe dans l'intervalle allant de 1 à 100,
+ q se situe dans l'intervalle allant de 0 à 25,
- les symboles A et B représentent des groupements terminaux qui comprennent :
+ s'agissant de A : soit des radicaux (i), (2i) ou (3i) pris seuls, soit des mélanges de radicaux (i) avec des radicaux (2i) et/ou (3i) et/ou (4i): 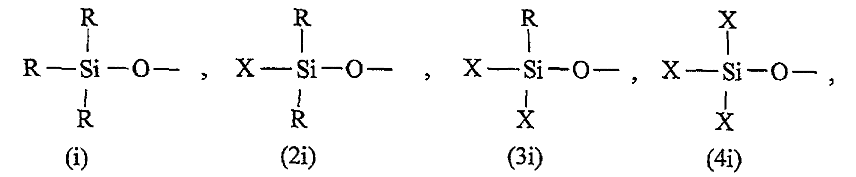
+ s'agissant de B : soit des radicaux (5i), (6i) ou (7i) pris seuls, soit des mélanges de radicaux (5i) avec des radicaux (6i) et/ou (7i) et/ou (8i): 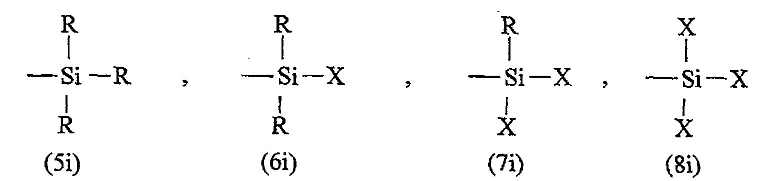
où les symboles R et X sont tels que définis supra ;
ledit procédé de préparation des POS de formule (I) étant **caractérisé en ce qu'**il consiste à faire réagir l'hydrogène sulfuré sur un copolymère linéaire, statistique, séquencé ou à bloc, de formule moyenne : 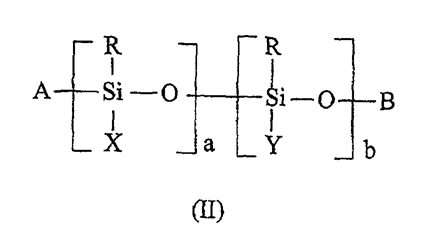 dans laquelle :
- il n'y a pas plus de 3 % de motifs autres que les motifs définis dans la formule (II) - c'est-à-dire les motifs RXSiO_{2/2}, RYSiO_{2/2} et les motifs constitutifs des groupements terminaux A et B - lesdits motifs autres consistant dans des motifs T comprenant le motif RSiO_{3/2} et/ou dans des motifs Q = SiO_{4/2}, les % indiqués exprimant le nombre de motifs T et/ou Q pour 100 atomes de silicium ;
- les symboles A, B, R, X et Y sont tels que définis supra à propos de la formule (I) ;
- les symboles a et b représentent chacun des nombres entiers ou fractionnaires et sont définissables comme il suit :
+ a répond à la même définition que celle de m donnée supra à propos de la formule (I),
+ b = n + p + q ; n, p et q et leur somme répondant aux définitions données supra à propos de la formule (I),
+ la somme a + b répondant à la même définition que celle de la somme m + n + p + q donnée supra à propos de la formule (I) ;
la réaction de H₂S sur le POS (II) étant effectuée en présence d'un catalyseur à base d'un ou plusieurs composé(s) initiateur(s) de radicaux libres, en opérant à une température se situant dans l'intervalle allant de la température ambiante (23°C) à 150°C et en utilisant un excès molaire de H₂S par rapport à l'insaturation éthylénique du POS (II) qui est au moins égale à 5 %.

2. Procédé selon la revendication 1, **caractérisé en ce que** l'on fait réagir l'hydrogène sulfuré sur un POS de formule (II) dans laquelle :
- les symboles R représentent les radicaux : méthyle, éthyle, n-propyle, isopropyle, n-butyle ;
- les symboles X représentent des radicaux alkoxyles, linéaires ou ramifiés, ayant de 1 à 6 atomes de carbone ;
- les symboles A et B représentent des groupements terminaux qui sont respectivement d'une part soit des radicaux (i), (2i) ou (3i) pris seuls, soit des mélanges formés des radicaux (i) + [(2i) et/ou (3i) et/ou (4i)] et d'autre part soit des radicaux (5i), (6i) ou (7i) pris seuls, soit des mélanges formés des radicaux (5i) + [(6i) et/ou (7i) et/ou (8i)], où les symboles R et X correspondent aux modalités définies juste ci-avant dans les deux paragraphes précédents, la composition molaire des groupements terminaux s'établissant comme suivant:
• 0 à 100 % molaire de l'ensemble des groupements terminaux comprennent des motifs (R)₃Si, lesquels sont apportés par les radicaux de formules (i) et/ou (5i),
• 0 à 100 % molaire de l'ensemble des groupements terminaux comprennent des motifs (R)₂XSi, lesquels sont apportés par les radicaux de formules (2i) et/ou (6i),
• 0 à 100 % molaire de l'ensemble des groupements terminaux comprennent des motifs R(X)₂Si, lesquels sont apportés par les radicaux de formules (3i) et/ou (7i), et
• 0 à 20 % molaire de l'ensemble des groupements terminaux comprennent des motifs (X)₃Si, lesquels sont apportés par les radicaux de formules (4i) et/ou (8i),
• la somme des radicaux devant dans chaque cas être égale à 100 % en mole ;
- les symboles Y sont sélectionnés dans la liste qui suit : 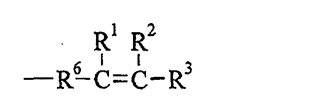 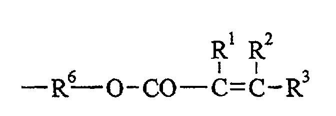 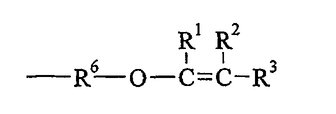 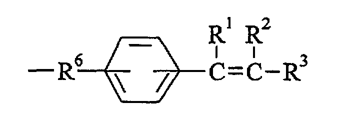 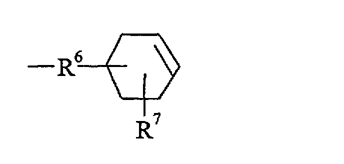 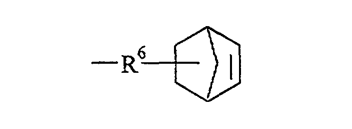 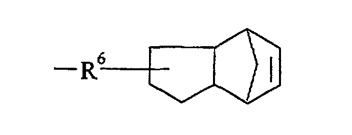 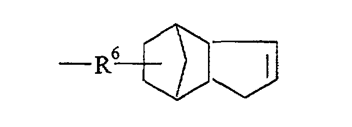 où:
- R¹, R² et R³, identiques ou différents, représentent chacun un atome d'hydrogène ou un radical méthyle ;
- R⁶ représente un radical divalent -(CHR⁸)-ⱼ avec R⁸ étant un atome d'hydrogène ou un groupe méthyle, les différents motifs CHR⁸ pouvant être identiques ou différents entre eux, et avec j étant un nombre entier allant de 1 à 6;
- R⁷ représente un atome d'hydrogène ou un radical méthyle ;
- la somme a + b se situe dans l'intervalle allant de 10 à 100, a est un nombre allant de 1 à 50 et b est un nombre allant de 1 à 50.

3. Procédé selon la revendication 1 ou 2, **caractérisé en ce que** la réaction entre le H₂S et le POS de formule (II) utilise comme catalyseur au moins un composé initiateur de radicaux libres appartenant à la famille des composés azo-organiques et des péroxydes organiques.

4. Procédé selon l'une quelconque des revendications 1 à 3, **caractérisé en ce que** la température de réaction entre le H₂S et le POS de formule (II) se situe dans l'intervalle allant de 50°C à 120°C.

5. Procédé selon l'une quelconque des revendications 1 à 4, **caractérisé en ce que** la réaction entre le H₂S et le POS de formule (II) est conduite dans un réacteur fermé en opérant sous une pression se situant dans l'intervalle allant de 5.10⁵ à 20.10⁵ Pa.

6. Procédé selon l'une quelconque des revendications 1 à 5, **caractérisé en ce que** la réaction entre le H₂S et le POS de formule (II) est conduite en milieu homogène par addition d'un solvant ou d'un mélange de solvant(s) commun(s) au POS (II) et au catalyseur.

7. Procédé selon la revendication 6, **caractérisé en ce que** l'on utilise des solvants apolaires aprotiques pris dans le groupe formé par le chlorobenzène, le toluène, le xylène, l'hexane, le cyclohexane, l'octane et le décane.

8. Polyorganosiloxanes multifonctionnalisés, comprenant des fonctions polaires alkoxyles et des fonctions comportant chacune un groupement thiol SH, qui sont obtenus par le procédé selon l'une quelconque des revendications 1 à 7, **caractérisés en ce qu'**il s'agit de copolymères linéaires, statistiques, séquencés ou à bloc, de formule moyenne suivante : 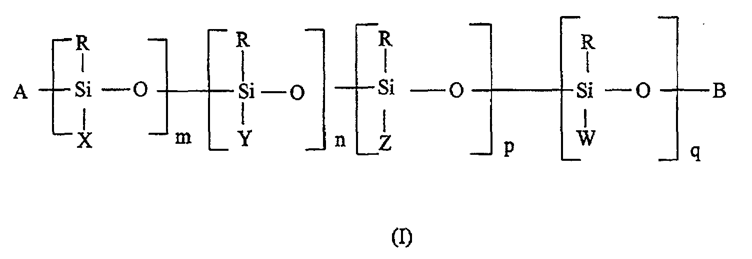 dans laquelle :
- il n'y a pas plus de 3 % de motifs autres que les motifs définis dans la formule (II) - c'est-à-dire les motifs RXSiO_{2/2}, RYSiO_{2/2} et les motifs constitutifs des groupements terminaux A et B - lesdits motifs autres consistant dans des motifs T comprenant le motif RSiO_{3/2} et/ou dans des motifs Q = SiO_{4/2}, les % indiqués exprimant le nombre de motifs T et/ou Q pour 100 atomes de silicium ;
- les symboles R, identiques ou différents entre eux, représentent chacun un radical alkyle, linéaire ou ramifié, ayant de 1 à 6 atomes de carbone ou un radical phényle ;
- les symboles X, identiques ou différents entre eux, représentent chacun un radical alkoxyle, linéaire ou ramifié, ayant de 1 à 15 atomes de carbone ;
- les symboles Y, identiques ou différents entre eux, représentent chacun une chaîne R' incluant une insaturation éthylénique, ladite chaîne étant liée à l'atome de silicium par une liaison Si-C où :
+ la chaîne R' possède de 2 à 30 atomes de carbone et éventuellement un ou plusieurs hétéroatome(s) oxygéné(s),
+ l'insaturation éthylénique de R' est :
→ soit présente en terminaison de chaîne et du type : 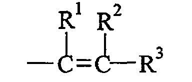 où les symboles R¹, R² et R³, identiques ou différents entre eux, représentent chacun un atome d'hydrogène ou un radical alkyle, linéaire ou ramifié, ayant de 1 à 3 atomes de carbone,
→ soit présente dans une position intermédiaire et du type : 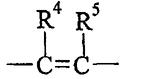 où les symboles R⁴, R⁵, identiques ou différents entre eux, représentent chacun un atome d'hydrogène ou un radical alkyle, linéaire ou ramifié, ayant de 1 à 3 atomes de carbone, ladite position intermédiaire pouvant être située sur une partie cyclique ou polycyclique de la chaîne R' consistant dans un ou plusieurs cycle(s) ayant de 5 à 12 chaînons ;
- les symboles Z, identiques ou différents entre eux, représentent chacun une chaîne R" liée à un groupement SH, ladite chaîne étant attachée à l'atome de silicium par une liaison Si-C, où :
+ la chaîne R" dérive de la chaîne R' définie supra par addition d'un atome d'hydrogène et d'un groupement SH respectivement sur l'un et l'autre des atomes de carbone doublement liés entre eux de l'insaturation éthylénique,
+ le groupement SH est :
→ soit présent en terminaison de chaîne et du (ou des) type(s) suivant(s) : 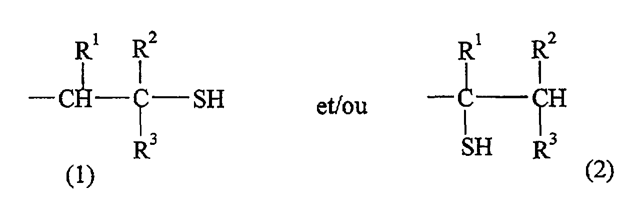 où les symboles R¹, R² et R³ sont tels que définis supra,
→ soit présent dans une position intermédiaire et du (ou des) type(s) suivant(s) : 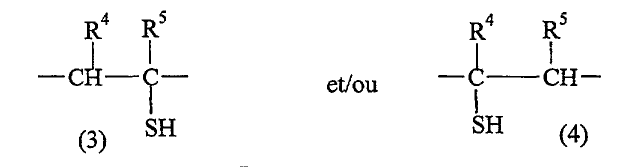 où les symboles R⁴ et R⁵ sont tels que définis supra, ladite position intermédiaire pouvant être située sur une partie cyclique ou polycyclique de la chaîne consistant dans un ou plusieurs cycle(s) ayant de 5 à 12 chaînons ;
- les symboles W, identiques ou différents entre eux, représentent chacun un enchaînement -R"-(S)ᵢ-R"-Si≡ où :
+ i est un nombre entier ≥ 1,
+ le symbole de droite Si≡ représente un atome de silicium appartenant à une autre chaîne polyorganosiloxane ou à la même chaîne polyorganosiloxane ;
- les symboles m, n, p et q représentent chacun des nombres entiers ou fractionnaires, avec les conditions complémentaires selon lesquelles :
+ la somme m + n + p + q se situe dans l'intervalle allant de 2 à 300,
+ m se situe dans l'intervalle allant de 1 à 150,
+ la somme n + p + q se situe dans l'intervalle allant de 1 à 150,
+ n se situe dans l'intervalle allant de 0 à 85,
+ p se situe dans l'intervalle allant de 1 à 100,
+ q se situe dans l'intervalle allant de 0 à 25, et en plus :
+ soit le symbole n est un nombre égal à zéro et le symbole q représente alors un nombre différent de zéro,
+ soit le symbole n représente un nombre différent de zéro et le symbole q représente alors un nombre qui est égal à zéro ou différent de zéro,
- les symboles A et B représentent des groupements terminaux qui comprennent :
+ s'agissant de A : soit des radicaux (i), (2i) ou (3i) pris seuls, soit des mélanges de radicaux (i) avec des radicaux (2i) et/ou (3i) et/ou (4i) : 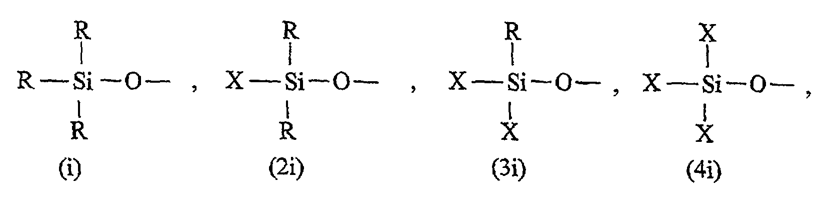
+ s'agissant de B : soit des radicaux (5i), (6i) ou (7i) pris seuls, soit des mélanges de radicaux (5i) avec des radicaux (6i) et/ou (7i) et/ou (8i) : 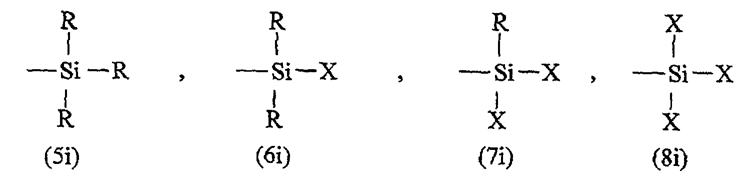
où les symboles R et X sont tels que définis supra.

9. Utilisation d'une quantité efficace d'au moins un POS multifonctionnalisé de formule (I) obtenu par le procédé selon l'une quelconque des revendications 1 à 7, et/ou d'au moins un POS multifonctionnalisé selon la revendication 8, comme agent modulateur d'anti-adhérence dans des compositions silicones.

10. Utilisation d'une quantité efficace d'au moins un POS multifonctionnalisé de formule (I) obtenu par le procédé selon l'une quelconque des revendications 1 à 7, et/ou d'au moins un POS multifonctionnalisé selon la revendication 8, comme agent de recouvrement de charge blanche en vue de favoriser la mise en oeuvre de la charge dans les compositions de silicones chargées et de permettre de renforcer les produits silicones obtenus.

11. Utilisation d'une quantité efficace d'au moins un POS muitifonctionnalisé de formule (I) obtenu par le procédé selon l'une quelconque des revendications 1 à 7, et/ou d'au moins un POS multifonctionnalisé selon la revendication 8, comme agent de couplage charge blanche-élastomère dans les compositions d'élastomère(s) naturel(s) ou synthétique(s) comprenant une charge blanche à titre de charge renforçante, qui sont destinées à la fabrication d'articles en élastomère(s).

12. Utilisation selon les revendications 11 et 2, **caractérisée en ce que** les POS choisis sont les POS de formule (I), sélectionnés parmi ceux obtenus par le procédé défini supra dans la revendication 2, qui possèdent des symboles Z, identiques ou différents, représentant chacun une chaîne R" liée à un groupement SH de nature secondaire.

13. Compositions d'élastomère(s) comprenant une charge blanche renforçante obtenues grâce à l'emploi d'une quantité efficace d'au moins un POS multifonctionnalisé de formule (I) préparé par le procédé selon l'une quelconque des revendications 1 à 7, et/ou d'au moins un POS multifonctionnalisé selon la revendication 8.

14. Compositions selon les revendications 13 et 2, **caractérisées en ce que** les POS choisis sont les POS de formule (I), sélectionnés parmi ceux obtenus par le procédé défini supra dans la revendication 2, qui possèdent des symboles Z, identiques ou différents, représentant chacun une chaîne R" liée à un groupement SH de nature secondaire.

15. Compositions selon la revendication 13 ou 14, **caractérisées en ce qu'**elles comprennent (les parties sont données en poids) :
• pour 100 parties d'élastomère(s),
• 10 à 100 parties de charge blanche renforçante, et
• 0,5 à 15 parties de POS pour 100 parties de charge blanche renforçante.

16. Compositions selon l'une quelconque des revendications 13 à 15, **caractérisées en ce que** la charge blanche consiste dans la silice, l'alumine ou un mélange de ces deux espèces.

17. Composition selon la revendication 16, **caractérisées en ce que** :
- la silice est une silice de précipitation présentant une surface spécifique BET ≤ à 450 m²/g ou une silice de précipitation présentant une surface spécifique BET ainsi qu'une surface CTAB toutes deux ≤ à 450 m²/g ;
- l'alumine est une alumine présentant une surface spécifique BET comprise entre 30 et 400 m²/g, une taille moyenne de particules au plus égale à 500 nm et un taux de fonctions réactives de surface Al-OH élevé correspondant à celui des alumines de type γ, δ ou θ.

18. Compositions selon l'une quelconque des revendications 13 à 17, **caractérisées en ce que** le (ou les) élastomère(s) mis en oeuvre est(sont) choisi(s) parmi:
(1) les homopolymères obtenus par polymérisation d'un monomère diène conjugué ayant de 4 à 22 atomes de carbone ;
(2) les copolymères obtenus par copolymérisation d'un ou plusieurs des diènes conjugués précités entre eux ou avec un ou plusieurs monomères insaturés éthyléniquement choisis parmi :
- les monomères vinyles aromatiques ayant de 8 à 20 atomes de carbone ;
- les monomères nitriles vinyliques ayant de 3 à 12 atomes de carbone ;
- les monomères esters acryliques dérivés de l'acide acrylique ou de l'acide méthacrylique avec des alcanols ayant de 1 à 12 atomes de carbone ;
(3) les copolymères obtenus par copolymérisation d'éthylène, avec une α-oléfine ayant de 3 à 6 atomes de carbone ;
(4) les copolymères ternaires obtenus par copolymérisation d'éthylène, d'une α-oléfine ayant 3 à 6 atomes de carbone avec un monomère diène non conjugué ayant de 6 à 12 atomes de carbone ;
(5) le caoutchouc naturel ;
(6) les copolymères obtenus par copolymérisation d'isobutène et d'isoprène (caoutchouc butyle), ainsi que les versions halogénées ;
(7) un mélange de plusieurs des élastomères précités (1) à (6) entre eux ;
(8) les polyéthylènes chlorosulfonés ;
(9) les hydrocarbures fluorés ;
(10) les élastomères du type épichlorohydrine-oxyde d'éthylène ou polyépichlorohydrine.

19. Compositions selon la revendication 18, **caractérisées en ce que** l'on fait appel à un ou plusieurs élastomère(s) choisi(s) parmi : le polybutadiène, le polychloroprène, le polyisoprène, le poly(styrène-butadiène), le poly(acrylonitrile-butadiène) sous forme hydrogénée ou non, le poly(styrène-butadiène-isoprène), un terpolymère(éthylène-propylène-diène monomère non conjugué), le caoutchouc naturel, le caoutchouc butyle.

20. Compositions selon l'une quelconque des revendications 13 à 19, **caractérisées en ce qu'**elles renferment en outre tout ou partie des autres constituants et additifs auxiliaires habituellement utilisés dans le domaine des compositions d'élastomère(s) et de caoutchouc(s).

21. Compositions selon la revendication 20, **caractérisées en ce qu'**elles renferment en outre un agent d'aide à la mise en oeuvre choisi dans le groupe formé par:
1) une huile α,ω-(dihydroxy)polydiorganosiloxane de formule : 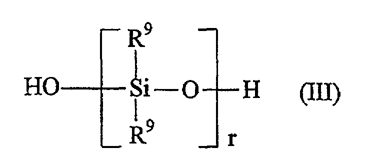 où : r a une valeur suffisante pour donner à l'huile une viscosité dynamique à 25°C comprise entre 5 et 1000 mPa.s, et les radicaux organiques R⁹ sont des radicaux méthyle, éthyle, propyles et/ou phényle ;
2) un polyalkylèneglycol de formule 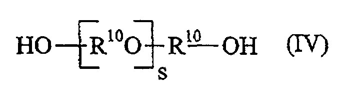 où : s a une valeur suffisante pour donner au composé de formule (IV) une masse moléculaire moyenne en nombre comprise entre 100 et 30.000 ; et les radicaux R¹⁰, identiques ou différents entre eux, représentent chacun un radical alkylène, linéaire ou ramifié, ayant de 1 à 4 atomes de carbone ;
3) un silane hydrolysable de formule
(R¹¹)ₜSi(E)₄₋ₜ (V)
où : les symboles R¹¹ représentent chacun un radical alkyle linéaire ou ramifié en C₁ - C₈, un radical cycloalkyle en C₅ - C₈, un radical aryle en C₆ - C₁₂ ou aralkyle ayant une partie aryle en C₆ - C₁₂ et une partie alkyle en C₁ - C₄ ; les symboles E sont des groupes hydrolysables et représentent chacun un groupe alkoxy en C₁ - C₁₀, un groupe aryloxy en C₆ - C₁₂, un groupe acyloxy en C₁ - C₁₃, un groupe cétiminoxy en C₁ - C₈ ;
4) un polyorganosiloxane de recouvrement consistant soit dans un POS de formule (II) répondant aux définitions données supra dans la revendication 1 en légende de la formule (II), soit dans un POS de formule : 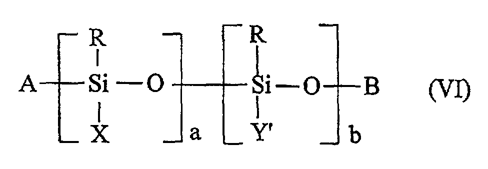 dans laquelle : les symboles A, B, R, X, a et b répondent aux définitions données supra dans la revendication 1 en légende de la formule II) ; et les symboles Y', identiques ou différents entre eux, représentent chacun un groupe alkyle, linéaire ou ramifié, en C₇ - C₃₀; et
5) un mélange d'au moins deux des agents 1) à 4) précités.

22. Articles en élastomère(s) **caractérisés en ce qu'**ils possèdent un corps comprenant une composition selon l'une quelconque des revendications 13 à 21.

23. Articles selon la revendication 22, **caractérisés en ce qu'**ils consistent dans des supports de moteurs, des pièces de chenilles de véhicule, des semelles de chaussures, des galets de téléphérique, des joints d'appareillages électroménagers et des gaines de câbles.

## Patentansprüche

1. Verfahren zur Herstellung von mehrfach funktionalisierten Polyorganosiloxanen (POS), die umfassen polare Alkoxyfunktionen und Funktionen, jede eine SH-Thiolgruppe umfassend, die lineare, statistische, Sequenz- oder Blockcopolymere der folgenden mittleren Formel sind: 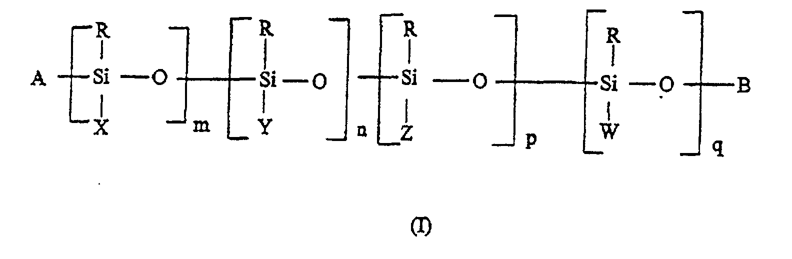 worin:
- es nicht mehr als 3% Einheiten gibt, die anders sind als die in der Formel (I) definierten Einheiten - das heißt die Einheiten RXSiO_{2/2}, RYSiO_{2/2}, RZSiO_{2/2}, RWSiO_{2/2} und die Grundeinheiten der endständigen Gruppen A und B -, wobei besagte andere Einheiten bestehen aus Einheiten T umfassend die Einheit RSiO_{3/2} und/oder aus Einheiten Q = SiO_{4/2}, wobei die angegebenen % die Anzahl an Einheiten T und/oder Q pro 100 Siliciumatome ausdrücken;
- die Symbole R, die untereinander gleich oder verschieden sind, jeweils einen linearen oder verzweigten Alkylrest mit 1 bis 6 Kohlenstoffatomen oder einen Phenylrest darstellen;
- die Symbole X, die untereinander gleich oder verschieden sind, jeweils einen linearen oder verzweigten Alkoxyrest mit 1 bis 15 Kohlenstoffatomen darstellen;
- die Symbole Y, die untereinander gleich oder verschieden sind, jeweils eine Kette R' darstellen, die eine ethylenische ungesättigte Bindung beinhaltet, wobei besagte Kette an das Siliciumatom durch eine Si-C-Bindung gebunden ist, worin:
+ die Kette R' 2 bis 30 Kohlenstoffatome und gegebenenfalls ein oder mehrere Sauerstoffheteroatom(e) besitzt,
+ die ethylenische ungesättigte Bindung von R' ist:
→ entweder am Kettenende vorhanden und vom Typ: 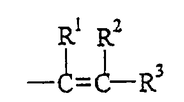 worin die Symbole R¹, R² und R³, die untereinander gleich oder verschieden sind, jeweils ein Wasserstoffatom oder einen linearen oder verzweigten Alkylrest mit 1 bis 3 Kohlenstoffatomen darstellen,
→ oder in einer Zwischenposition vorhanden und vom Typ: 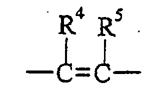 worin die Symbole R⁴, R⁵, die untereinander gleich oder verschieden sind, jeweils ein Wasserstoffatom oder einen linearen oder verzweigten Alkylrest mit 1 bis 3 Kohlenstoffatomen darstellen, wobei besagte Zwischenposition liegen kann in einem cyclischen oder polycyclischen Teil der Kette R', die besteht aus einem oder mehreren Ring(en) mit 5 bis 12 Ringgliedern;
- die Symbole Z, die untereinander gleich oder verschieden sind, jeweils eine Kette R" darstellen, die an eine SH-Gruppe gebunden ist, wobei besagte Kette an das Siliciumatom durch eine Si-C-Bindung gebunden ist, worin:
+ die Kette R" sich ableitet von der oben definierten Kette R' durch Addition eines Wasserstoffatoms und einer SH-Gruppe an dem einen beziehungsweise dem anderen der untereinander doppelgebundenen Kohlenstoffatome der ethylenischen ungesättigten Bindung,
+ die SH-Gruppe ist:
→ entweder am Kettenende vorhanden und von dem (oder den) folgenden Typ(en): 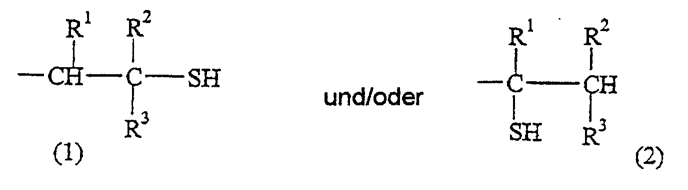 worin die Symbole R¹, R² und R³ wie oben definiert sind,
→ oder in einer Zwischenposition vorhanden und von dem (oder den) folgenden Typ(en): 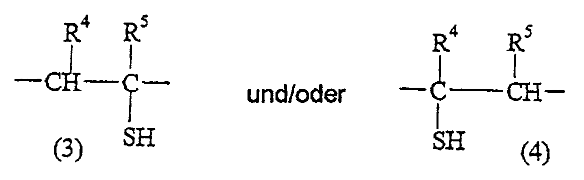 worin die Symbole R⁴ und R⁵ wie oben definiert sind, wobei besagte Zwischenposition liegen kann in einem cyclischen oder polycyclischen Teil der Kette, die besteht aus einem oder mehreren Ring(en) mit 5 bis 12 Ringgliedern;
- die Symbole W, die untereinander gleich oder verschieden sind, jeweils eine Verknüpfung -R"-(S)ᵢ-R"-Si≡ darstellen, worin:
+ i eine ganze Zahl ≥ 1 ist,
+ das rechte Symbol Si≡ ein Siliciumatom darstellt, das zu einer anderen Polyorganosiloxankette oder zu der gleichen Polyorganosiloxankette gehört;
- die Symbole m, n, p und q jeweils ganze oder gebrochene Zahlen darstellen mit den zusätzlichen Bedingungen, gemäß denen:
+ die Summe m + n + p + q in dem Intervall von 2 bis 300 liegt,
+ m in dem Intervall von 1 bis 150 liegt,
+ die Summe n + p + q in dem Intervall von 1 bis 150 liegt,
+ n in dem Intervall von 0 bis 85 liegt,
+ p in dem Intervall von 1 bis 100 liegt,
+ q in dem Intervall von 0 bis 25 liegt,
- die Symbole A und B endständige Gruppen darstellen, die umfassen:
+ wenn es sich um A handelt: entweder Reste (i), (2i) oder (3i), allein genommen, oder Gemische von Resten (i) mit Resten (2i) und/oder (3i) und/oder (4i): 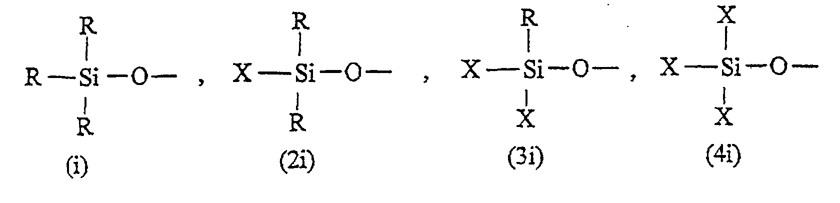
+ wenn es sich um B handelt: entweder Reste (5i), (6i) oder (7i), allein genommen, oder Gemische von Resten (5i) mit Resten (6i) und/oder (7i) und/oder (8i): 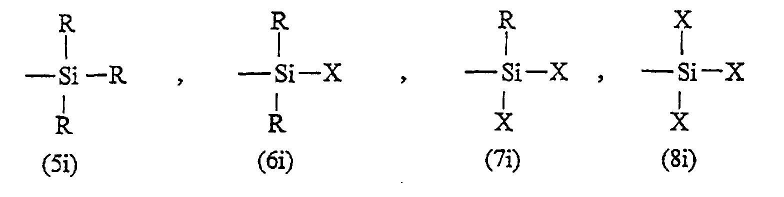
worin die Symbole R und X wie oben definiert sind;
wobei besagtes Verfahren zur Herstellung der POS der Formel (I) **dadurch gekennzeichnet ist, dass** es daraus besteht, Schwefelwasserstoff umzusetzen mit einem linearen, statistischen, Sequenz- oder Blockcopolymer der mittleren Formel: 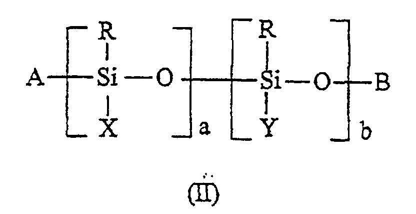 worin:
- es nicht mehr als 3% Einheiten gibt, die anders sind als die in der Formel (II) definierten Einheiten - das heißt die Einheiten RXSiO_{2/2}, RYSiO_{2/2} und die Grundeinheiten der endständigen Gruppen A und B -, wobei besagte andere Einheiten bestehen aus Einheiten T umfassend die Einheit RSiO_{3/2} und/oder aus Einheiten Q = SiO_{4/2}, wobei die angegebenen % die Anzahl an Einheiten T und/oder Q pro 100 Siliciumatome ausdrücken;
- die Symbole A, B, R, X und Y wie oben bezüglich der Formel (I) definiert sind;
- die Symbole a und b jeweils ganze oder gebrochene Zahlen darstellen und wie folgt definierbar sind:
+ a entspricht derselben Definition wie derjenigen von m, die oben bezüglich der Formel (I) angegeben wurde,
+ b = n + p + q; wobei n, p und q und ihre Summe den oben bezüglich der Formel (I) angegebenen Definitionen entsprechen,
+ wobei die Summe a + b derselben Definition wie derjenigen der Summe m + n + p + q entspricht, die oben bezüglich der Formel (I) angegeben wurde;
wobei die Reaktion von H₂S an dem POS (II) ausgeführt wird in Gegenwart eines Katalysators auf der Basis einer oder mehrerer, freie Radikale erzeugender Verbindung(en), indem man bei einer Temperatur arbeitet, die in dem Intervall von der Raumtemperatur (23°C) bis 150°C liegt, und indem man einen molaren Überschuss an H₂S, bezogen auf die ethylenische ungesättigte Bindung des POS (II), der wenigstens gleich 5% ist, verwendet.

2. Verfahren gemäß Anspruch 1, **dadurch gekennzeichnet, dass** man Schwefelwasserstoff umsetzt mit einem POS der Formel (II), worin:
- die Symbole R die Reste darstellen: Methyl, Ethyl, n-Propyl, Isopropyl, n-Butyl;
- die Symbole X lineare oder verzweigte Alkoxyreste mit 1 bis 6 Kohlenstoffatomen darstellen;
- die Symbole A und B endständige Gruppen darstellen, die sind einerseits entweder Reste (i), (2i) oder (3i), allein genommen, oder Gemische, gebildet aus den Resten (i) + [(2i) und/oder (3i) und/oder (4i)], beziehungsweise andererseits entweder Reste (5i), (6i) oder (7i), allein genommen, oder Gemische, gebildet aus den Resten (5i) + [(6i) und/oder (7i) und/oder (8i)], worin die Symbole R und X den Modalitäten entsprechen, die gerade zuvor in den beiden vorhergehenden Abschnitten definiert wurden, wobei die molare Zusammensetzung der endständigen Gruppen sich wie folgt aufbaut:
• 0 bis 100 Mol-% der Gesamtheit der endständigen Gruppen umfassen Einheiten (R)₃Si, die von den Resten der Formeln (i) und/oder (5i) beigebracht werden,
• 0 bis 100 Mol-% der Gesamtheit der endständigen Gruppen umfassen Einheiten (R)₂XSi, die von den Resten der Formeln (2i) und/oder (6i) beigebracht werden,
• 0 bis 100 Mol-% der Gesamtheit der endständigen Gruppen umfassen Einheiten (RX)₂Si, die von den Resten der Formeln (3i) und/oder (7i) beigebracht werden, und
• 0 bis 20 Mol-% der Gesamtheit der endständigen Gruppen umfassen Einheiten (X)₃Si, die von den Resten der Formeln (4i) und/oder (8i) beigebracht werden,
• wobei die Summe der Reste in jedem Fall gleich 100 Mol-% sein muss;
- die Symbole Y aus der folgenden Liste ausgewählt sind: 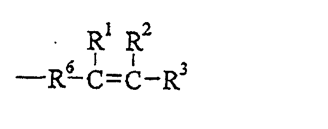 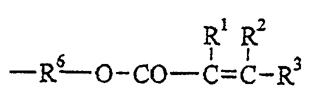 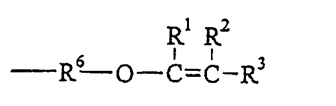 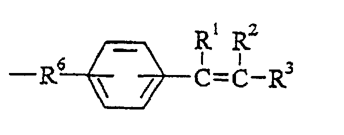 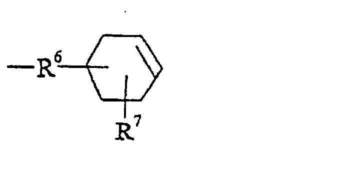 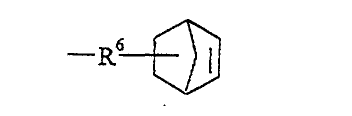 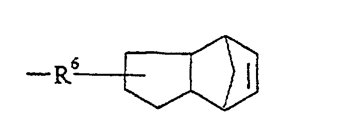 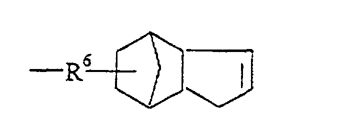 worin:
- R¹, R² und R³, die gleich oder verschieden sind, jeweils ein Wasserstoffatom oder einen Methylrest darstellen;
- R⁶ einen zweiwertigen Rest -(CHR⁸)-ⱼ darstellt, mit R⁸ als ein Wasserstoffatom oder eine Methylgruppe, wobei die verschiedenen Einheiten CHR⁸ untereinander gleich oder verschieden sein können, und mit j als eine ganze Zahl von 1 bis 6;
- R⁷ ein Wasserstoffatom oder einen Methylrest darstellt;
- die Summe a + b in dem Intervall von 10 bis 100 liegt, a eine Zahl von 1 bis 50 ist und b eine Zahl von 1 bis 50 ist.

3. Verfahren gemäß Anspruch 1 oder 2, **dadurch gekennzeichnet, dass** die Reaktion zwischen H₂S und dem POS der Formel (II) als Katalysator wenigstens eine freie Radikale erzeugende Verbindung verwendet, die der Familie der azo-organischen Verbindungen und der organischen Peroxide angehört.

4. Verfahren gemäß einem der Ansprüche 1 bis 3, **dadurch gekennzeichnet, dass** die Temperatur der Reaktion zwischen H₂S und dem POS der Formel (II) in dem Intervall von 50°C bis 120°C liegt.

5. Verfahren gemäß einem der Ansprüche 1 bis 4, **dadurch gekennzeichnet, dass** die Reaktion zwischen H₂S und dem POS der Formel (II) in einem geschlossenen Reaktor ausgeführt wird, indem man unter einem Druck arbeitet, der in dem Intervall von 5·10⁵ bis 20·10⁵ Pa liegt.

6. Verfahren gemäß einem der Ansprüche 1 bis 5, **dadurch gekennzeichnet, dass** die Reaktion zwischen H₂S und dem POS der Formel (II) in homogenem Medium ausgeführt wird durch Zugabe eines Lösungsmittels oder eines Gemischs von Lösungsmitteln, das(die) für das POS (II) und den Katalysator gemeinsam ist(sind).

7. Verfahren gemäß Anspruch 6, **dadurch gekennzeichnet, dass** man aprotische apolare Lösungsmittel verwendet, die aus der von Chlorbenzol, Toluol, Xylol, Hexan, Cyclohexan, Octan und Decan gebildeten Gruppe genommen werden.

8. Mehrfach funktionalisierte Polyorganosiloxane, die umfassen polare Alkoxyfunktionen und Funktionen, jede eine SH-Thiolgruppe umfassend, erhalten durch das Verfahren gemäß einem der Ansprüche 1 bis 7, **dadurch gekennzeichnet, dass** es sich handelt um lineare, statistische, Sequenz- oder Blockcopolymere der folgenden mittleren Formel: 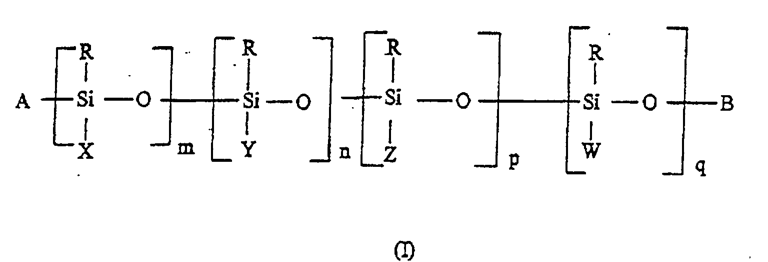 worin:
- es nicht mehr als 3% Einheiten gibt, die anders sind als die in der Formel (II) definierten Einheiten - das heißt die Einheiten RXSiO_{2/2}, RYSiO_{2/2} und die Grundeinheiten der endständigen Gruppen A und B -, wobei besagte andere Einheiten bestehen aus Einheiten T umfassend die Einheit RSiO_{3/2} und/oder aus Einheiten Q = SiO_{4/2}, wobei die angegebenen % die Anzahl an Einheiten T und/oder Q pro 100 Siliciumatome ausdrücken;
- die Symbole R, die untereinander gleich oder verschieden sind, jeweils einen linearen oder verzweigten Alkylrest mit 1 bis 6 Kohlenstoffatomen oder einen Phenylrest darstellen;
- die Symbole X, die untereinander gleich oder verschieden sind, jeweils einen linearen oder verzweigten Alkoxyrest mit 1 bis 15 Kohlenstoffatomen darstellen;
- die Symbole Y, die untereinander gleich oder verschieden sind, jeweils eine Kette R' darstellen, die eine ethylenische ungesättigte Bindung beinhaltet, wobei besagte Kette an das Siliciumatom durch eine Si-C-Bindung gebunden ist, worin:
+ die Kette R' 2 bis 30 Kohlenstoffatome und gegebenenfalls ein oder mehrere Sauerstoffheteroatom(e) besitzt,
+ die ethylenische ungesättigte Bindung von R' ist:
→ entweder am Kettenende vorhanden und vom Typ: 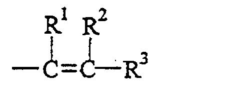 worin die Symbole R¹, R² und R³, die untereinander gleich oder verschieden sind, jeweils ein Wasserstoffatom oder einen linearen oder verzweigten Alkylrest mit 1 bis 3 Kohlenstoffatomen darstellen,
→ oder in einer Zwischenposition vorhanden und vom Typ: 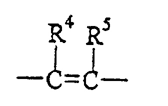 worin die Symbole R⁴, R⁵, die untereinander gleich oder verschieden sind, jeweils ein Wasserstoffatom oder einen linearen oder verzweigten Alkylrest mit 1 bis 3 Kohlenstoffatomen darstellen, wobei besagte Zwischenposition liegen kann in einem cyclischen oder polycyclischen Teil der Kette R', die besteht aus einem oder mehreren Ring(en) mit 5 bis 12 Ringgliedern;
- die Symbole Z, die untereinander gleich oder verschieden sind, jeweils eine Kette R" darstellen, die an eine SH-Gruppe gebunden ist, wobei besagte Kette an das Siliciumatom durch eine Si-C-Bindung gebunden ist, worin:
+ die Kette R" sich ableitet von der oben definierten Kette R' durch Addition eines Wasserstoffatoms und einer SH-Gruppe an dem einen beziehungsweise dem anderen der untereinander doppelgebundenen Kohlenstoffatome der ethylenischen ungesättigten Bindung,
+ die SH-Gruppe ist:
→ entweder am Kettenende vorhanden und von dem (oder den) folgenden Typ(en): 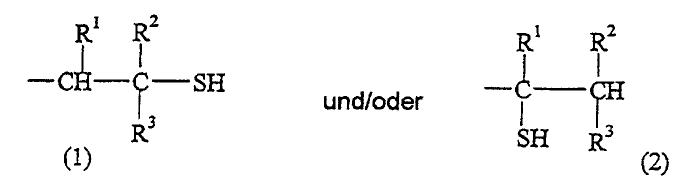 worin die Symbole R¹, R² und R³ wie oben definiert sind,
→ oder in einer Zwischenposition vorhanden und von dem (oder den) folgenden Typ(en): 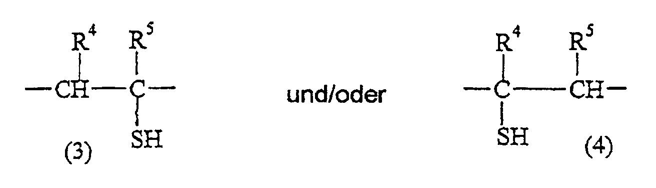 worin die Symbole R⁴ und R⁵ wie oben definiert sind, wobei besagte Zwischenposition liegen kann in einem cyclischen oder polycyclischen Teil der Kette, die besteht aus einem oder mehreren Ring(en) mit 5 bis 12 Ringgliedern;
- die Symbole W, die untereinander gleich oder verschieden sind, jeweils eine Verknüpfung -R"-(S)ᵢ-R"-Si≡ darstellen, worin:
+ i eine ganze Zahl ≥ 1 ist,
+ das rechte Symbol Si≡ ein Siliciumatom darstellt, das zu einer anderen Polyorganosiloxankette oder zu der gleichen Polyorganosiloxankette gehört;
- die Symbole m, n, p und q jeweils ganze oder gebrochene Zahlen darstellen mit den zusätzlichen Bedingungen, gemäß denen:
+ die Summe m + n + p + q in dem Intervall von 2 bis 300 liegt,
+ m in dem Intervall von 1 bis 150 liegt,
+ die Summe n + p + q in dem Intervall von 1 bis 150 liegt,
+ n in dem Intervall von 0 bis 85 liegt,
+ p in dem Intervall von 1 bis 100 liegt,
+ q in dem Intervall von 0 bis 25 liegt und zusätzlich:
+ entweder das Symbol n eine Zahl gleich Null ist und das Symbol q dann eine von Null verschiedene Zahl darstellt,
+ oder das Symbol n eine von Null verschiedene Zahl darstellt und das Symbol q dann eine Zahl darstellt, die gleich Null oder von Null verschieden ist,
- die Symbole A und B endständige Gruppen darstellen, die umfassen:
+ wenn es sich um A handelt: entweder Reste (i), (2i) oder (3i), allein genommen, oder Gemische von Resten (i) mit Resten (2i) und/oder (3i) und/oder (4i): 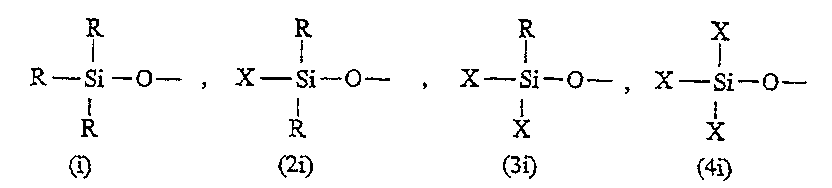
+ wenn es sich um B handelt: entweder Reste (5i), (6i) oder (7i), allein genommen, oder Gemische von Resten (5i) mit Resten (6i) und/oder (7i) und/oder (8i): 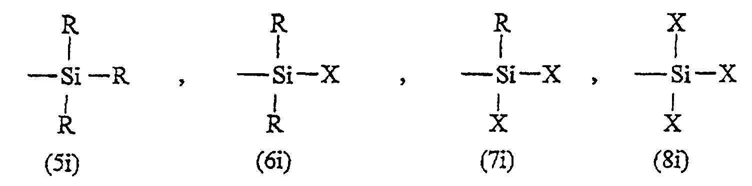
worin die Symbole R und X wie oben definiert sind.

9. Verwendung einer wirksamen Menge von wenigstens einem mehrfach funktionalisierten POS der Formel (1), erhalten durch das Verfahren gemäß einem der Ansprüche 1 bis 7, und/oder von wenigstens einem mehrfach funktionalisierten POS gemäß Anspruch 8 als Mittel zur Anpassung der Antihafteigenschaften in Siliconzusammensetzungen.

10. Verwendung einer wirksamen Menge von wenigstens einem mehrfach funktionalisierten POS der Formel (I), erhalten durch das Verfahren gemäß einem der Ansprüche 1 bis 7, und/oder von wenigstens einem mehrfach funktionalisierten POS gemäß Anspruch 8 als Überzugsmittel für weißen Füllstoff, um die Verarbeitung des Füllstoffs in den Siliconzusammensetzungen mit Füllstoff zu begünstigen und es zu ermöglichen, die erhaltenen Siliconprodukte zu verstärken.

11. Verwendung einer wirksamen Menge von wenigstens einem mehrfach funktionalisierten POS der Formel (I), erhalten durch das Verfahren gemäß einem der Ansprüche 1 bis 7, und/oder von wenigstens einem mehrfach funktionalisierten POS gemäß Anspruch 8 als Kopplungsmittel weißer Füllstoff - Elastomer in den Zusammensetzungen von natürlichem(n) oder synthetischem(n) Elastomer(en) umfassend einen weißen Füllstoff als Verstärkungsfüllstoff, die zur Herstellung von Gegenständen aus Elastomer(en) bestimmt sind.

12. Verwendung gemäß den Ansprüchen 11 und 2, **dadurch gekennzeichnet, dass** die gewählten POS die POS der Formel (I) sind, die unter denen ausgewählt sind, die durch das oben in Anspruch 2 definierte Verfahren erhalten werden, die gleiche oder verschiedene Symbole Z besitzen, wobei jedes eine Kette R", die an eine sekundäre SH-Gruppe gebunden ist, darstellt.

13. Zusammensetzungen von Elastomer(en) umfassend einen weißen Verstärkungsfüllstoff, die erhalten werden durch die Verwendung einer wirksamen Menge von wenigstens einem mehrfach funktionalisierten POS der Formel (I), hergestellt durch das Verfahren gemäß einem der Ansprüche 1 bis 7, und/oder von wenigstens einem mehrfach funktionalisierten POS gemäß Anspruch 8.

14. Zusammensetzungen gemäß den Ansprüchen 13 und 2, **dadurch gekennzeichnet, dass** die gewählten POS die POS der Formel (I) sind, die unter denen ausgewählt sind, die durch das oben in Anspruch 2 definierte Verfahren erhalten werden, die gleiche oder verschiedene Symbole Z besitzen, wobei jedes eine Kette R", die an eine sekundäre SH-Gruppe gebunden ist, darstellt.

15. Zusammensetzungen gemäß Anspruch 13 oder 14, **dadurch gekennzeichnet, dass** sie umfassen (die Teile sind in Gewicht angegeben):
• pro 100 Teile Elastomer(e)
• 10 bis 100 Teile weißen Verstärkungsfüllstoff und
• 0,5 bis 15 Teile POS pro 100 Teile weißen Verstärkungsfüllstoff.

16. Zusammensetzungen gemäß einem der Ansprüche 13 bis 15, **dadurch gekennzeichnet, dass** der weiße Füllstoff aus Siliciumdioxid, Aluminiumoxid oder einem Gemisch dieser beiden Spezies besteht.

17. Zusammensetzungen gemäß Anspruch 16, **dadurch gekennzeichnet, dass**:
- das Siliciumdioxid ein gefälltes Siliciumdioxid ist, das eine spezifische BET-Oberfläche ≤ 450 m²/g aufweist, oder ein gefälltes Siliciumdioxid, das eine spezifische BET-Oberfläche sowie eine CTAB-Oberfläche aufweist, die alle beide ≤ 450 m²/g sind;
- das Aluminiumoxid ein Aluminiumoxid ist, das eine spezifische BET-Oberfläche zwischen 30 und 400 m²/g, eine mittlere Teilchengröße höchstens gleich 500 nm und einen hohen Gehalt an reaktiven Oberflächenfunktionen Al-OH, der demjenigen der Aluminiumoxide vom γ-, δ- oder θ-Typ entspricht, aufweist.

18. Zusammensetzungen gemäß einem der Ansprüche 13 bis 17, **dadurch gekennzeichnet, dass** das (oder die) Elastomer(e), das(die) eingesetzt wird(werden), ausgewählt ist(sind) unter:
(1) den Homopolymeren, die erhalten werden durch Polymerisation eines konjugierten Dien-Monomers mit 4 bis 22 Kohlenstoffatomen;
(2) den Copolymeren, die erhalten werden durch Copolymerisation von einem oder mehreren der oben angeführten konjugierten Diene untereinander oder mit einem oder mehreren ethylenisch ungesättigten Monomeren, die ausgewählt sind unter:
- den aromatischen Vinyl-Monomeren mit 8 bis 20 Kohlenstoffatomen;
- den Vinylnitrilmonomeren mit 3 bis 12 Kohlenstoffatomen;
- den Acrylestermonomeren, die abgeleitet sind von Acrylsäure oder Methacrylsäure mit Alkanolen mit 1 bis 12 Kohlenstoffatomen;
(3) den Copolymeren, die erhalten werden durch Copolymerisation von Ethylen mit einem α-Olefin mit 3 bis 6 Kohlenstoffatomen;
(4) den ternären Copolymeren, die erhalten werden durch Copolymerisation von Ethylen, einem α-Olefin mit 3 bis 6 Kohlenstoffatomen mit einem nicht konjugierten Dien-Monomer mit 6 bis 12 Kohlenstoffatomen;
(5) Naturkautschuk;
(6) den Copolymeren, die erhalten werden durch Copolymerisation von Isobuten und Isopren (Butylkautschuk), sowie den halogenierten Versionen;
(7) einem Gemisch von mehreren der oben angeführten Elastomere (1) bis (6) untereinander;
(8) den Chlorsulfonpolyethylenen;
(9) den Fluorkohlenwasserstoffen;
(10) den Elastomeren vom Typ Ethylen-Epichlorhydrin-oxid oder Polyepichlorhydrin.

19. Zusammensetzungen gemäß Anspruch 18, **dadurch gekennzeichnet, dass** man ein oder mehrere Elastomer(e) verwendet, das(die) ausgewählt ist(sind) unter: Polybutadien, Polychloropren, Polyisopren, Poly(styrol-butadien), Poly(acrylnitril-butadien) in hydrierter oder nicht hydrierter Form, Poly(styrol-butadien-isopren), einem Terpolymer (Ethylen-Propylen-nicht konjugiertes Dien-Monomer), Naturkautschuk, Butylkautschuk.

20. Zusammensetzungen gemäß einem der Ansprüche 13 bis 19, **dadurch gekennzeichnet, dass** sie außerdem alle oder einen Teil der weiteren Bestandteile und Hilfsstoffe enthalten, die üblicherweise auf dem Gebiet der Zusammensetzungen von Elastomer(en) und Gummi(s) verwendet werden.

21. Zusammensetzungen gemäß Anspruch 20, **dadurch gekennzeichnet, dass** sie außerdem ein Hilfsmittel zur Verarbeitung enthalten, das ausgewählt ist aus der Gruppe, die gebildet wird von:
1) einem α,ω-(Dihydroxy)polydiorganosiloxan-Öl der Formel: 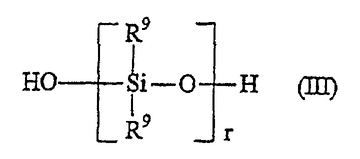 worin: r einen Wert hat, der ausreicht, um dem Öl eine dynamische Viskosität bei 25°C zwischen 5 und 1000 mPa·s zu geben, und die organischen Reste R⁹ Methyl-, Ethyl-, Propyl- und/oder Phenylreste sind;
2) einem Polyalkylenglykol der Formel: 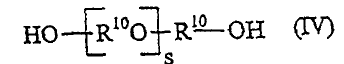 worin: s einen Wert hat, der ausreicht, um der Verbindung der Formel (IV) ein Zahlenmittel der Molekülmasse zwischen 100 und 30.000 zu geben; und die Reste R¹⁰, die untereinander gleich oder verschieden sind, jeweils einen linearen oder verzweigten Alkylenrest mit 1 bis 4 Kohlenstoffatomen darstellen;
3) einem hydrotysierbaren Silan der Formel
(R¹¹)ₜSi(E)₄₋ₜ (V)
worin: die Symbole R¹¹ jeweils einen linearen oder verzweigten C₁-C₈-Alkylrest, einen C₅-C₈-Cycloalkylrest, einen C₆-C₁₂-Arylrest oder Aralkylrest mit einem C₆-C₁₂-Arylteil und einem C₁-C₄-Alkylteil darstellen; die Symbole E hydrolysierbare Gruppen sind und jeweils eine C₁-C₁₀-Alkoxygruppe, eine C₆-C₁₂-Aryloxygruppe, eine C₁-C₁₃-Acyloxygruppe, eine C₁-C₈-Ketiminoxygruppe darstellen;
4) einem Polyorganosiloxan zum Überziehen, das entweder besteht aus einem POS der Formel (II) entsprechend den Definitionen, die oben in Anspruch 1 in der Legende der Formel (II) angegeben sind, oder aus einem POS der Formel: 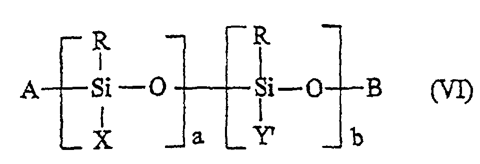 worin: die Symbole A, B, R, X, a und b den oben in Anspruch 1 in der Legende der Formel (II) angegebenen Definitionen entsprechen; und die Symbole Y', die untereinander gleich oder verschieden sind, jeweils eine lineare oder verzweigte C₇-C₃₀-Alkylgruppe darstellen; und
5) einem Gemisch von wenigstens zweien der oben angeführten Mittel 1) bis 4).

22. Gegenstände aus Elastomer(en), **dadurch gekennzeichnet, dass** sie einen Körper besitzen, der eine Zusammensetzung gemäß einem der Ansprüche 13 bis 21 umfasst.

23. Gegenstände gemäß Anspruch 22, **dadurch gekennzeichnet, dass** sie aus Motoraufhängungen, Teilen von Fahrzeugraupen, Schuhsohlen, Seilbahnrollen, Dichtungen für Elektrohaushaltsgeräte und Kabelumhüllungen bestehen.

## Claims

1. Process for preparing multifunctionalized polyorganosiloxanes (POSs) comprising alkoxyl polar functional groups and functional groups each having a thiol group SH, which are random, sequentially-polymerized or blocked linear copolymers of the following average formula: 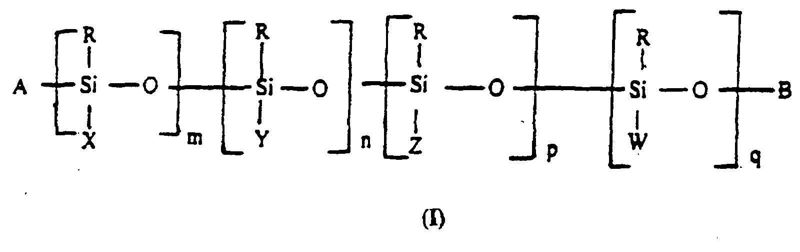 in which:
- there are no more than 3% of units other than the units defined in formula (I) - i.e. the units RXSiO_{2/2}, RYSiO_{2/2}, RZSiO_{2/2}, RWSiO_{2/2} and the constituent units of the terminal groups A and B - the said other units consisting of units T comprising the unit RSiO_{3/2} and/or of the units Q = SiO_{4/2}, the % values indicated expressing the number of T and/or Q units per 100 silicon atoms;
- the symbols R, which are identical or different, each represent a linear or branched alkyl radical having from 1 to 6 carbon atoms or a phenyl radical;
- the symbols X, which are identical or different, each represent a linear or branched alkoxyl radical having from 1 to 15 carbon atoms;
- the symbols Y, which are identical or different, each represent a chain R' which includes an ethylenically unsaturated group, the said chain being linked to the silicon atom by an Si-C bond where:
+ the chain R' has from 2 to 30 carbon atoms and, optionally, one or more oxygenated heteroatoms,
+ the ethylenically unsaturated group of R' is:
→ either present as a chain termination and of the type: 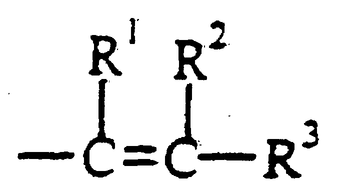 where the symbols R¹, R² and R³, which are identical or different, each represent a hydrogen atom or a linear or branched alkyl radical having from 1 to 3 carbon atoms,
→ or present in an intermediate position and of the following type (or types) : 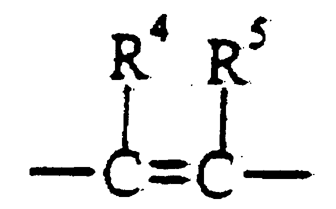 where the symbols R⁴, R⁵, which are identical or different, each represent a hydrogen atom or a linear or branched alkyl radical having from 1 to 3 carbon atoms, it being possible for the said intermediate position to be on a cyclic or polycyclic part of the chain R' consisting of one or more rings having from 5 to 12 members;
- the symbols Z, which are identical or different, each represent a chain R" linked to an SH group, the said chain being attached to the silicon atom by an Si-C bond, where:
+ the chain R" derives from the above-defined chain R' by the addition of a hydrogen atom and of an SH group respectively on one or other of the carbon atoms of the ethylenically unsaturated group which are linked to each other by a double bond,
+ the SH group is:
→ either present as a chain termination and of. the following type (or types): 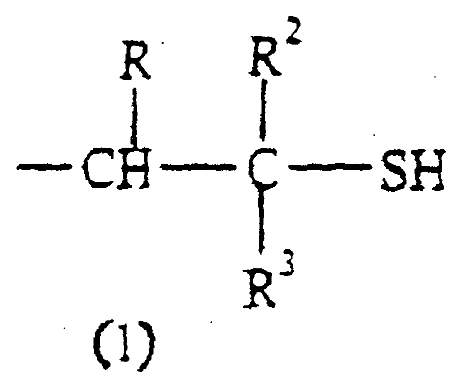 and/or 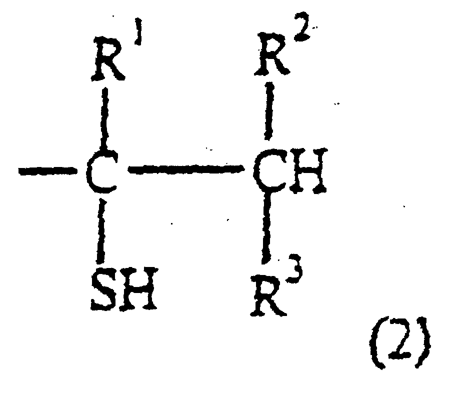 where the symbols R¹, R² and R³ are as defined above,
→ or present in an intermediate position and of the following type (or types): 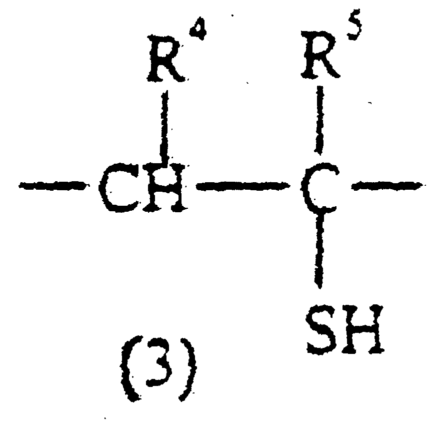 and/or 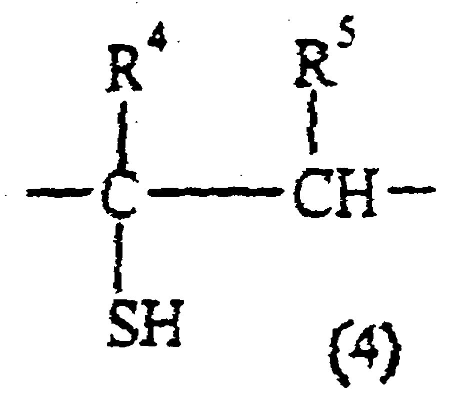 where the symbols R⁴ and R⁵ are as defined above, it being possible for the said intermediate position to be on a cyclic or polycyclic part of the chain consisting of one or more rings having from 5 to 12 members;
- the symbols W, which are identical or different, each represent a sequence -R"-(S)ᵢ-R"-Si≡ where:.
+ i is an integer ≥ 1,
+ the symbol on the right, Si≡, represents a silicon atom belonging to another polyorganosiloxane chain or to the same polyorganosiloxane chain;
- the symbols m, n, p and q each represent integers or fractions, with the additional conditions in which:
+ the sum m + n + p + q lies within the range 2 to 300,
+ m lies within the range 1 to 150,
+ the sum n + p + q lies within the range 1 to 150,
+ n lies within the range 0 to 85,
+ p lies within the range 1 to 100,
+ q lies within the range 0 to 25,
- the symbols A and B represent terminal groups which comprise:
+ with respect to A: either radicals (i), (2i) or (3i) taken alone, or mixtures of radicals (i) with radicals (2i) and/or (3i) and/or (4i): 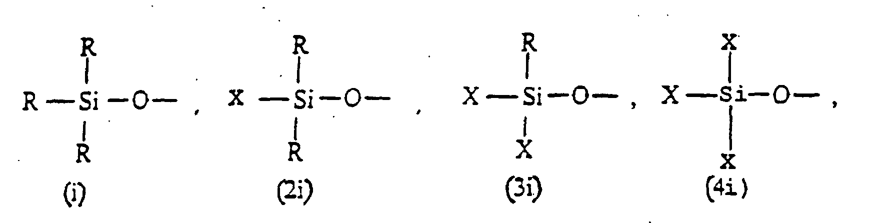
+ with respect to B: either radicals (5i), (6i) or (7i) taken alone, or mixtures of radicals (5i) with radicals (6i) and/or (7i) and/or (8i): 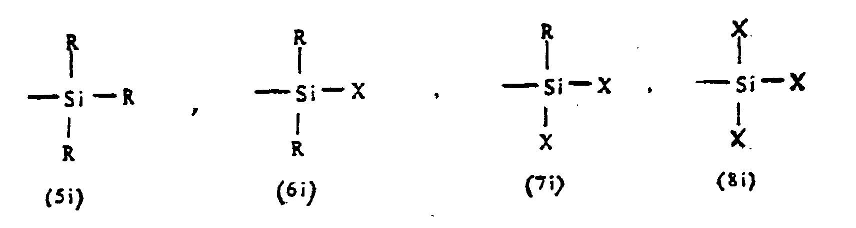 where the symbols R and X are as defined above; the said process for preparing the POSs of formula (I) being **characterized in that** it consists in making hydrogen sulphide react on a random, sequentially-polymerized or block linear copolymer, of average formula: 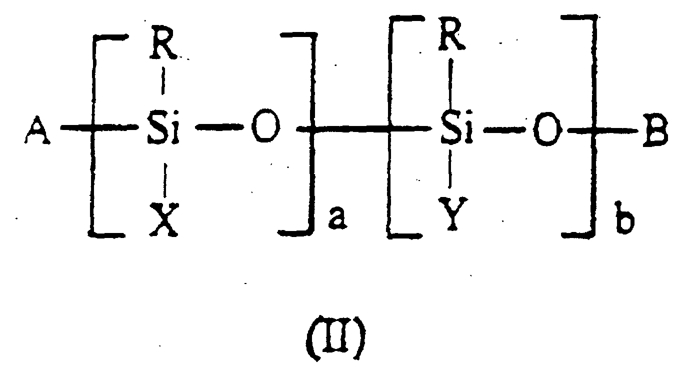 in which:
- there are no more than 3% of units other than the units defined in formula (II) - i.e. the units RXSiO_{2/2}, RYSiO_{2/2} and the constituent units of the terminal groups A and B - the said other units consisting of units T comprising the unit RSiO_{3/2} and/or of the units Q = SiO_{4/2}, the % values indicated expressing the number of T and/or Q units per 100 silicon atoms;
- the symbols A, B, R, X and Y are defined as above with regard to formula (I);
- the symbols a and b each represent integers or fractions and can be defined as follows:
+ a meets the same definition as that of m given above with regard to formula (I),
+ b = n + p + q; n, p and q and their sum satisfying the definitions given above with regard. to formula (I),
+ the sum a + b meeting the same definition as that of the sum m + n + p + q given above with regard to formula (I);
the reaction of H₂S on the POS (II) being carried out in the presence of a catalyst based on one or more free-radical initiator compounds, at a temperature lying within the range from ambient temperature (23°C) to 150°C and by using a molar excess of H₂S with respect to the ethylenically unsaturated group of the POS (II) which is at least 5%.

2. Process according to Claim 1, **characterized in that** hydrogen sulphide is made to react on a POS of formula (II) in which:
- the symbols R represent the radicals: methyl, ethyl, n-propyl, isopropyl, n-butyl;
- the symbols X represent linear or branched alkoxyl radicals having from 1 to 6 carbon atoms;
- the symbols A and B represent terminal groups which are, respectively, on the one hand either radicals (i), (2i) or (3i) taken alone or mixtures formed from the radicals (i) + [(2i) and/or (3i) and/or (4i)] and on the other hand either radicals (5i), (6i) or (7i) taken alone or mixtures formed from the radicals (5i) + [(6i) and/or (7i) and/or (8i)], where the symbols R and X correspond to the terms defined as above in the two previous paragraphs, the molar composition of the terminal groups being made up as follows:
• 0 to 100 mol% of all terminal groups comprise (R)₃Si units, which are provided by the radicals of formulae (i) and/or (5i),
• 0 to 100 mol% of all terminal groups comprise (R)₂XSi units, which are provided by the radicals of formulae (2i) and/or (6i),
• 0 to 100 mol% of all terminal groups comprise R(X)₂Si units, which are provided by the radicals of formulae (3i) and/or (7i), and
• 0 to 20 mol% of all terminal groups comprise (X)₃Si units, which are provided by the radicals of formulae (4i) and/or (8i),
• the sum of the radicals having in each case to be equal to 100 mol%;
- the symbols Y are selected from the following list: 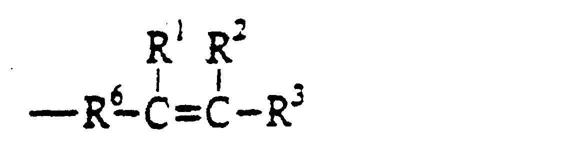 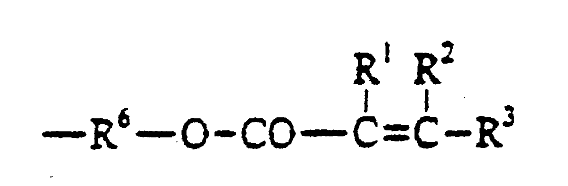 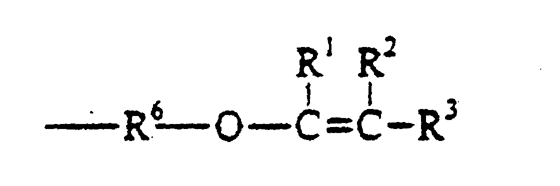 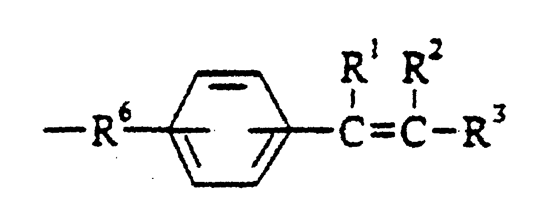 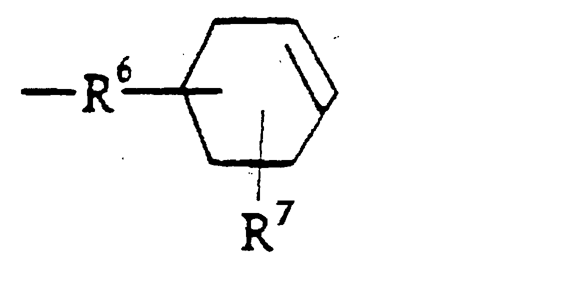 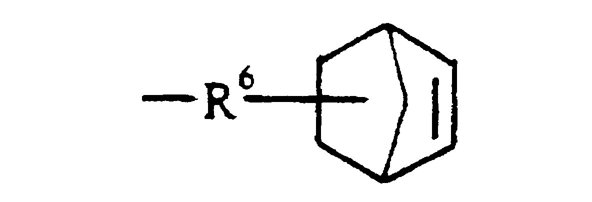 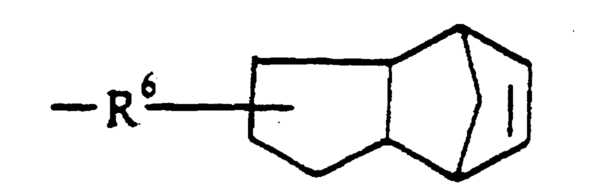 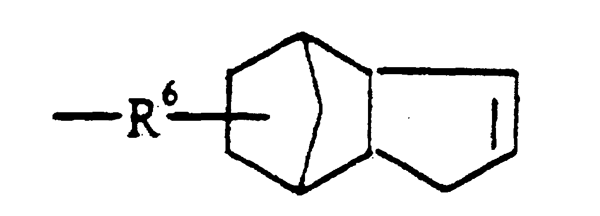 where:
- R¹, R² and R³, which are identical or different, each represent a hydrogen atom or a methyl radical;
- R⁶ represents a divalent radical -(CHR⁸)ⱼ-, with R⁸ being a hydrogen atom or a methyl group, it being possible for the various CHR⁸ units to be identical or different, and with j being an integer ranging from 1 to 6;
- R⁷ represents a hydrogen atom or a methyl radical;
- the sum a + b lies within the range 10 to 100, a is a number ranging from 1 to 50 and b is a number ranging from 1 to 50.

3. Process according to Claim 1 or 2, **characterized in that** the reaction between H₂S and the POS of formula (II) uses, as catalyst, at least one free-radical initiator compound belonging to the family . of azo-organic compounds and organic peroxides.

4. Process according to any one of Claims 1 to 3, **characterized in that** the temperature of the reaction between H₂S and the POS of formula (II) lies within the range 50°C to 120°C.

5. Process according to any one of Claims 1 to 4, **characterized in that** the reaction between H₂S and the POS of formula (II) is conducted in a closed reactor at a pressure lying within the range 5 × 10⁵ to 20 x 10⁵ Pa.

6. Process according to any one of Claims 1 to 5, **characterized in that** the reaction between H₂S and the POS of formula (II) is conducted in a homogeneous medium by the addition of a solvent or a mixture of solvent(s) common to the POS. (II) and to the catalyst.

7. Process according to Claim 6, **characterized in that** aprotic non-polar solvents taken from the group formed by chlorobenzene, toluene, xylene, hexane, cyclohexane, octane and decane are used.

8. Multifunctionalized polyorganosiloxanes comprising alkoxyl polar functional groups and functional groups each having a thiol group SH, which are obtained by the process according to any one of Claims 1 to 7, **characterized in that** they are random, sequentially-polymerized or block linear copolymers of the following average formula: 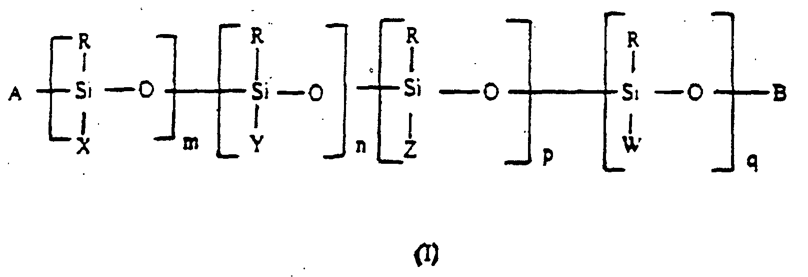 in which:
- there are no more than 3% of units other than the units defined in formula (II) - i.e. the units RXSiO_{2/2}, RYSiO_{2/2} and the constituent units of the terminal groups A and B - the said other units consisting of units T comprising the unit RSiO_{3/2} and/or of the units Q = SiO_{4/2}, the % values indicated expressing the number of T and/or Q units per 100 silicon atoms;
- the symbols R, which are identical or different, each represent a linear or branched alkyl radical having from 1 to 6 carbon atoms or a phenyl radical;
- the symbols X, which are identical or different, each represent a linear or branched alkoxyl radical having from 1 to 15 carbon atoms;
- the symbols Y, which are identical or different, each represent a chain R' which includes an ethylenically unsaturated group, the said chain being linked to the silicon atom by an Si-C bond where:
+ the chain R' has from 2 to 30 carbon atoms and, optionally, one or more oxygenated heteroatoms,
+ the ethylenically unsaturated group of R' is:
→ either present as a chain termination and of the type: 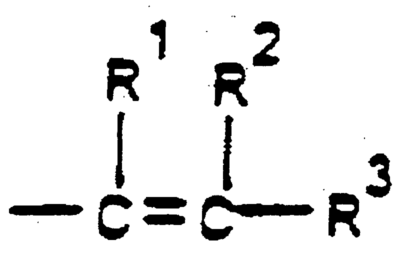 where the symbols R¹, R² and R³, which are identical or different, each represent a hydrogen atom or a linear or branched alkyl radical having from 1 to 3 carbon atoms,
→ or present in an intermediate position and of the type: 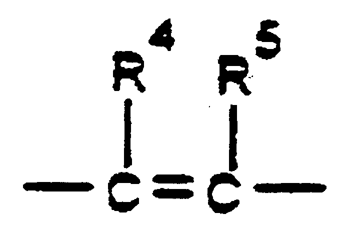 where the symbols R⁴, R⁵, which are identical or different, each represent a hydrogen atom or a linear or branched alkyl radical having from 1 to 3 carbon atoms, it being possible for the said intermediate position to be on a cyclic or polycyclic part of the chain R' consisting of one or more rings having from 5 to 12 members;
- the symbols Z, which are identical or different, each represent a chain R" linked to an SH group, the said chain being attached to the silicon atom by an Si-C bond, where:
+ the chain R" derives from the above-defined chain R' by the addition of a hydrogen atom and of an SH group respectively on one or other of the carbon atoms of the ethylenically unsaturated. group which are linked to each other by a double bond,
+ the SH group is:
→ either present as a chain termination and of the following type (or types): 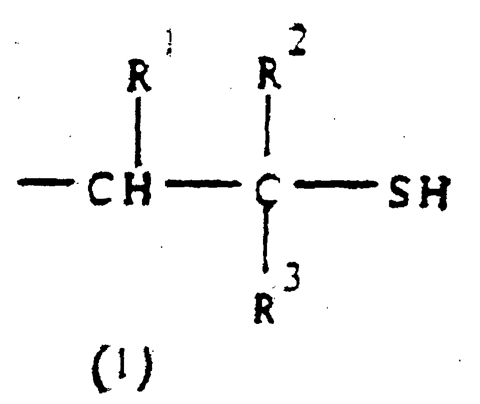 and/or 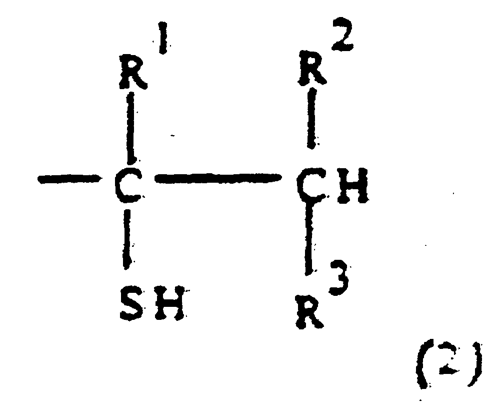 where the symbols R¹, R² and R³ are as defined above,
→ or present in an intermediate position and of the following type (or types): 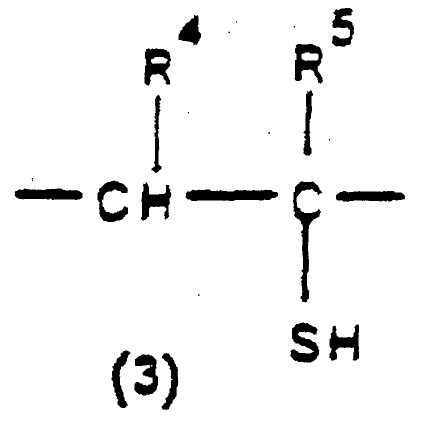 and/or 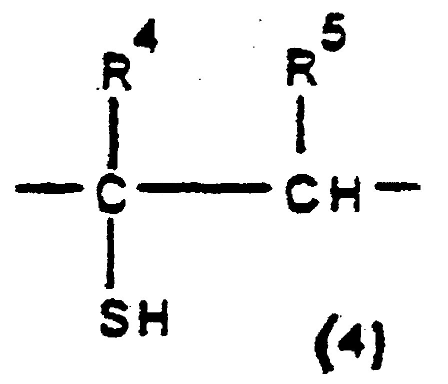 where the symbols R⁴ and R⁵ are as defined above, it being possible for the said intermediate position to be on a cyclic or polycyclic part of the chain consisting of one or more rings having from 5 to 12 members;
- the symbols W, which are identical or different, each represent a sequence -R"-(S)ᵢ-R"-Si≡ where:.
+ i is an integer ≥ 1,
+ the symbol on the right, Si≡, represents a silicon atom belonging to another polyorganosiloxane chain or to the same polyorganosiloxane chain;
- the symbols m, n, p and q each represent integers or fractions, with the additional conditions in which:
+ the sum m + n + p + q lies within the range 2 to 300,
+ m lies within the range 1 to 150,
+ the sum n + p + q lies within the range 1 to 150,
+ n lies within the range 0 to 85,
+ p lies within the range 1 to 100,
+ q lies within the range 0 to 25,
and furthermore:
+ either the symbol n is a number equal to zero and the symbol q then represents a number different from zero,
+ or the symbol n represents a number different from zero and the symbol q then represents a number which is equal to zero or different from zero,
- the symbols A and B represent terminal groups which comprise:
+ with. respect to A: either radicals (i), (2i) or (3i) taken alone, or mixtures of radicals (i) with radicals (2i) and/or (3i) and/or (4i) : 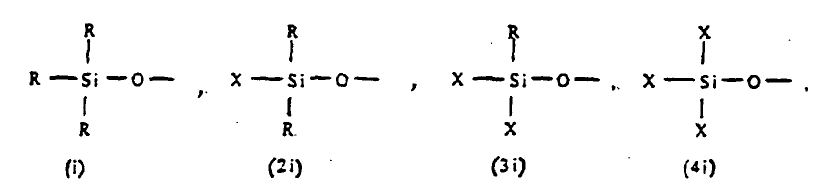
+ with respect to B: either radicals (5i), (6i) or (7i) taken alone, or mixtures of radicals (5i) with radicals (6i) and/or (7i) and/or (8i): 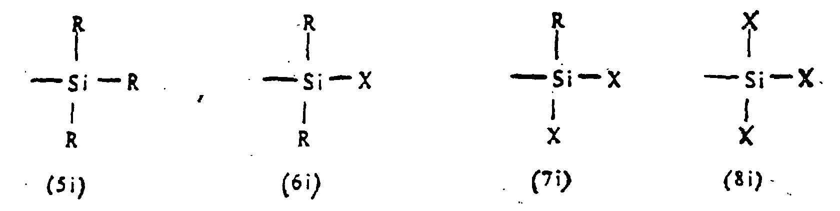 where the symbols R and X are as defined above.

9. Use of an effective amount of at least one multifunctionalized POS of formula (I) obtained by the process according to any one of Claims 1 to 7, and/or of at least one multifunctionalized POS according to Claim 8, as an anti-blocking modulator in silicone compositions.

10. Use of an effective amount of at least one multifunctionalized POS of formula (I) obtained by the process according to any one of claims 1 to 7, and/or of at least one multifunctionalized POS according to Claim 8, as a coating agent for a white filler for the purpose of aiding the processing of the filler in filled silicone compositions and of allowing the silicone products obtained to be reinforced.

11. Use of an effective amount of at least one multifunctionalized POS of formula (I) obtained by the process according to any one of Claims 1 to 7, and/or of at least one multifunctionalized POS according to Claim 8, as a white-filler elastomer coupling agent in compositions of one or more natural or synthetic elastomers containing a white filler by way of reinforcing filler, these compositions being intended for the manufacture of articles made of elastomer(s).

12. Use according to Claims 11 and 2, **characterized in that** the POSs chosen are the POSs of formula (I) selected from those obtained by the process defined above in Claim 2, which have identical or different symbols Z, each representing a chain R" linked to an SH group of secondary nature.

13. Compositions of one or more elastomers containing a reinforcing white filler and obtained by using an effective amount of at least one multifunctionalized POS of formula (I) prepared by the process according to any one of Claims 1 to 7, and/or of at least one multifunctionalized POS according to Claim 8.

14. Compositions according to Claims 13 and 2, **characterized in that** the POSs chosen are the POSs of formula (I) selected from those obtained by the process defined above in Claim 2, which have identical or different symbols Z, each representing a chain R" linked to an SH group of secondary nature.

15. Compositions according to Claim 13 or 14, **characterized in that** they contain (the parts are given by weight) :
• per 100 parts of elastomer (s),
• 10 to 100 parts of reinforcing white filler and
• 0.5 to 15 parts of POS per 100 parts of reinforcing white filler.

16. Compositions according to any one of Claims 13 to 15, **characterized in that** the white filler consists of silica, alumina or a mixture of these two species.

17. Composition according to claim 16, **characterized in that**:
- the silica is a precipitated silica having a BET specific surface area ≤ 450 m²/g or a precipitated silica having a BET specific surface area and a CTAB surface area both < 450 m²/g;
- the alumina is an alumina having a BET specific surface area of between 30 and 400 m²/g, a mean particle size of not more than 500 nm and a high content of Al-OH surface reactive functional groups corresponding to that of the aluminas of γ, δ or θ type.

18. Compositions according to any one of Claims 13 to 17, **characterized in that** the elastomer(s) employed is (are) chosen from:
(1) homopolymers obtained by polymerization of a conjugated diene monomer having from 4 to 22 carbon atoms;
(2) copolymers obtained by copolymerization of one or more of the aforementioned conjugated dienes amongst themselves or with one or more ethylenically unsaturated monomers chosen from:
- aromatic vinyl monomers having from 8 to 20 carbon atoms;
- vinyl nitryl monomers having from 3 to 12 carbon atoms;
- acrylic ester monomers derived from acrylic acid or from methacrylic acid with alkanols having from 1 to 12 carbon atoms;
(3) copolymers obtained by copolymerization of ethylene with an α-olefin having from 3 to 6 carbon atoms;
(4) ternary copolymers obtained by copolymerization of ethylene and of an α-olefin having from 3 to 6 carbon atoms with a nonconjugated diene monomer having from 6 to 12 carbon atoms;
(5) natural rubber;
(6) copolymers obtained by copolymerization of isobutene and of isoprene (butyl rubber) as well as halogenated versions;
(7) a mixture of several of the aforementioned elastomers (1) to (6) amongst themselves;
(8) chlorosulphonated polyethylenes;
(9) fluorinated hydrocarbons; and
(10) elastomers of the epichlorohydrin-ethylene oxide or polyepichlorohydrin type.

19. Compositions according to Claim 18, **characterized in that** use is made of one or more elastomers selected from: polybutadiene, polychloroprene, polyisoprene, poly(styrene-butadiene), poly(acrylonitrile-butadiene) in hydrogenated or non-hydrogenated form, poly(styrene-butadiene-isoprene), an (ethylene-propylene-nonconjugated diene monomer) terpolymer, natural rubber and butyl rubber.

20. Compositions according to any one of claims 13 to 19, **characterized in that** they furthermore contain all or some of the other constituents and auxiliary additives normally used in the field of elastomer and rubber compositions.

21. Compositions according to Claim 20, **characterized in that** they furthermore contain a processing aid selected from the group formed by:
1) an α,ω-(dihydroxy)polydiorganosiloxane oil of formula: 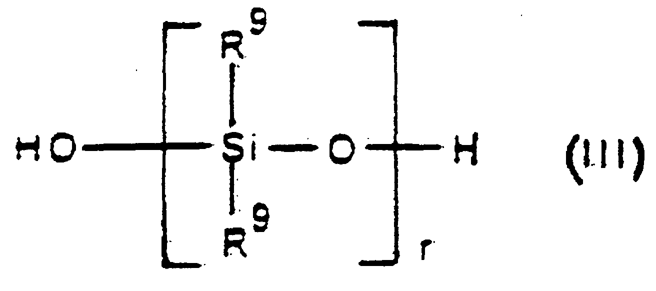 where:: r has a value sufficient to give the oil a dynamic viscosity at 25°C of between 5 and 1000 mPa.s and the organic radicals R⁹ are methyl, ethyl, propyl and/or phenyl radicals;
2) a polyalkylene glycol of formula: 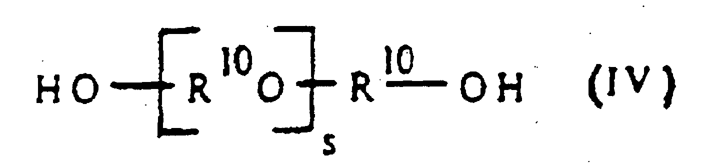 where: s has a value sufficient to give the compound of formula (IV) a number-average molecular mass of between 100 and 30,000 and the radicals R¹⁰, which are identical or different, each represent a linear or branched alkylene radical having from 1 to 4 carbon atoms;
3) a hydrolysable silane of formula
(R¹¹)ₜSi(E)₄₋ₜ (V)
where: the symbols R¹¹ each represent a C₁-C₈ linear or branched alkyl radical, a C₅-C₈ cycloalkyl radical, a C₆-C₁₂ aryl radical or an aralkyl radical having a C₆-C₁₂ aryl part and a C₁-C₄ alkyl part; the symbols E are hydrolysable groups and each represent a C₁-C₁₀ alkoxy group, a C₆-C₁₂ aryloxy group, a C₁-C₁₃ acyloxy group or a C₁-C₈ ketiminoxy group;
4) a coating polyorganosiloxane consisting either of a POS of formula (II) satisfying the definitions given above in Claim 1 in the legend for formula (II), or in a POS of formula: 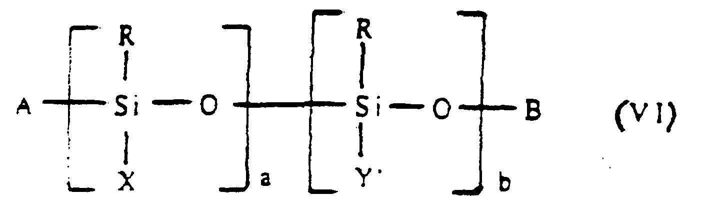 in which: the symbols A, B, R, X, a and b satisfy the definitions given above in claim 1 in the legend for formula (II); and the symbols Y', which are identical or different, each represent a C₇-C₃₀ linear or branched alkyl group; and
5) a mixture of at least two of the aforementioned agents 1) to 4).

22. Articles made of elastomer(s), **characterized in that** they have a body comprising a composition according to any one of Claims 13 to 21.

23. Articles according to Claim 22, **characterized in that** they consist of engine mounts, vehicle track components, shoe soles, cableway rollers, seals for domestic electrical appliances, and cable sheaths.
